# EUROPEAN PATENT SPECIFICATION

(11) **EP 0 618 636 B1**
(45) Date of publication and mention of the grant of the patent: **07.06.2000**
(21) Application number: 94400682.4
(22) Date of filing: 30.03.1994
(51) Int. Cl.: H01P 1/387, H01P 11/00

(54) **Multi-layer microwave circulator**
Mehrschichtiger Mikrowellenzirkulator
Circulateur hyperfréquence multicouche

(30) Priority: 31.03.1993 JP 9495193; 31.03.1993 JP 9495093
(43) Date of publication of application: 05.10.1994
(73) Proprietor: TDK Corporation, Chuo-ku, Tokyo-to 103 (JP)
(72) Inventor: Miura, Taro, Tokyo (JP); Kobayashi, Makoto, Yotsukaido-shi, Chiba (JP); Suzuki, Kazuaki, Narita-shi, Chiba (JP); Fujii, Tadao, Yachiyo-shi, Chiba (JP)
(74) Representative: Dubois-Chabert, Guy

(56) References cited:
- DE-A- 2 917 124
- GB-A- 2 266 412
- GB-A- 2 269 942
- PATENT ABSTRACTS OF JAPAN vol. 15 no. 183 (E-1065) ,10 May 1991 & JP-A-03 044011 (MURATA MFG CO LTD) 25 February 1991,
- IEEE TRANSACTIONS ON MICROWAVE THEORY AND TECHNIQUES, vol. 15, no. 12, December 1967 NEW YORK US, pages 748-750, B. HERSHENOV 'Microstrip junction circulator for microwave integrated circuits'

## Description

### 1. Field of the Invention

The present invention relates to a multi-layer circulator used in a microwave band radio device, for example in a mobile communication device such as a portable telephone.

### 2. Description of the Related Art

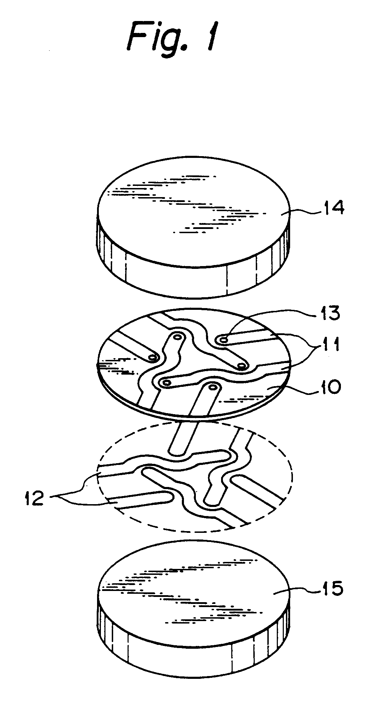

A conventional lumped element type circulator has an assembled circulator element with a circular plane shape and a basic structure as shown in an exploded oblique view of Fig. 1. In the figure, a reference numeral 10 denotes a circular substrate made of a non-magnetic material such as a glass-reinforced epoxy. Coil conductors (inner conductors) 11 and 12 are formed on top and bottom surfaces of the non-magnetic material substrate 10, respectively. These coil conductors 11 and 12 are electrically connected with each other by via holes 13 passing through the substrate 10. Circularly shaped members 14 and 15 made of a ferromagnetic material are attached to the both surfaces of the non-magnetic material substrate 10 having the coil conductors 11 and 12 so that rotating RF (Radio Frequency) magnetic fluxes are induced in these ferromagnetic members 14 and 15 due to an RF power applied to the coil conductors 11 and 12. As aforementioned, the conventional circulator element in the circulator has a circular plane shape and is constructed by assembling, namely piling and bonding, the ferromagnetic members 14 and 15 on the both sides of the non-magnetic material substrate 10.

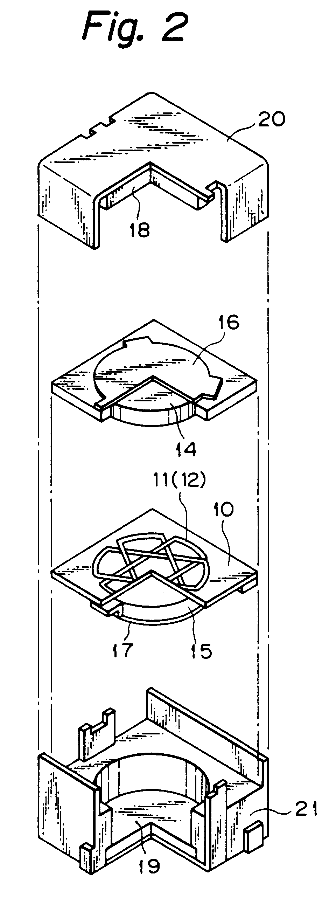

The circulator is then constructed, as shown in its exploded oblique view of Fig. 2, by stacking and fixing in sequence grounding conductor electrodes 16 and 17, exiting permanent magnets 18 and 19 and a metal housing separated to upper and lower parts 20 and 21 on the both ferromagnetic members 14 and 15, respectively. The housing parts 20 and 21 form a magnetic path of the magnetic flux from and to the exiting permanent magnets 18 and 19.

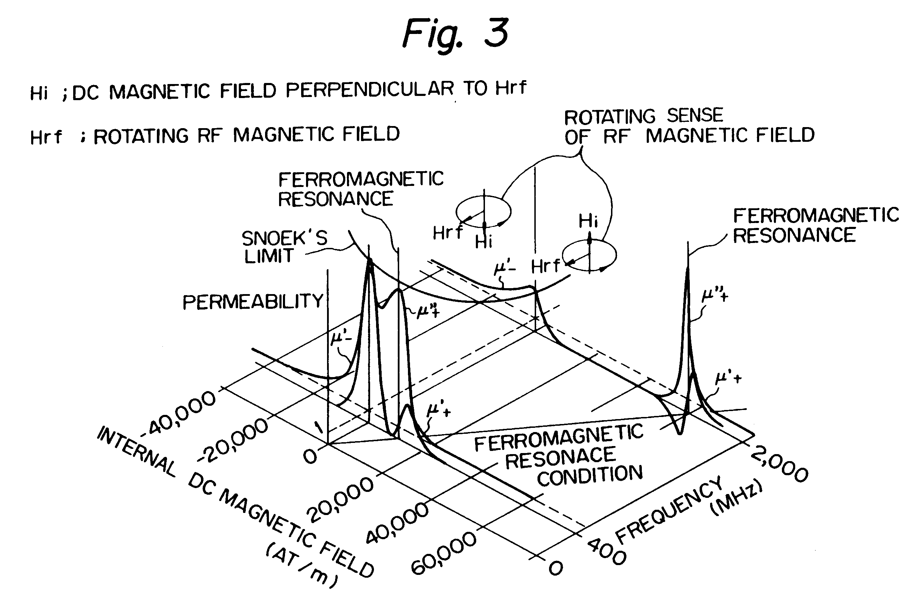

If an RF power is applied to the coil conductors 11 and 12 through input/output terminals not shown, RF magnetic flux rotating around the coil conductors 11 and 12 will be produced in the ferromagnetic members 14 and 15. Under this state, if a dc magnetic field perpendicular to the RF magnetic flux is applied from the permanent magnets 18 and 19, the ferromagnetic members 14 and 15 present different permeability µ ₊ and µ ₋ depending upon rotating sense of the RF magnetic flux, as shown in Fig. 3. A circulator utilizes this difference of the permeability depending upon the rotating sense. Namely, a propagation velocity of the RF signal in the circulator element will differ in accordance with the rotating sense and thus the signals transmitting to the opposite directions will be canceled each other resulting that the propagation of the signal to a particular port is prevented. A non-propagating port is determined in accordance with its angle against a driving port due to the permeability µ₊ and µ₋ of the ferromagnetic member. For example, if ports A, B and C are arranged in this order along a certain rotating sense, the port B will be determined as the non-propagating port against the driving port A and the port C will be determined as the non-propagating port against the driving port B.

The circulators have been broadly utilized as effective elements for preventing interference between amplifiers in a mobile communication device such as a portable telephone and also for protecting a power amplifier in the mobile communication device from a reflected power. With the spread of and downsizing of recent radio transmission devices, the circulators themselves are requested to be manufactured in lower cost and in smaller size and to operate with lower loss and in broader frequency band. In order to satisfy these requirements, it will be necessary to make a circulator having a large difference between the permeability µ₊ and µ₋ and having a driving circuit with small loss.

However, according to the conventional circulator shown in Fig. 1, since the driving lines 11 and 12 are formed on the non-magnetic material substrate 10 and these lines and substrate are put between the two separated ferromagnetic members 14 and 15, the magnetic path of the circulator is blocked by the non-magnetic material substrate 10. Thus, demagnetizing field will be produced at boundary faces between the non-magnetic material substrate 10 and the ferromagnetic members 14 and 15 causing the permeability to lower. As a result, the conventional circulator cannot sufficiently satisfy the aforementioned recent requirements.

In order to obtain a compact-sized circulator by reducing the demagnetizing field produced at the boundary faces of the substrate 10 against the ferromagnetic members 14 and 15, the inventors of this application made this substrate 10 by a sheet compounding a ferromagnetic material on an experimental basis. Although, this structure can somewhat reduce the demagnetizing field at the boundary faces, it is far from that satisfying the aforementioned requests.

Furthermore, since the circulator element according to the conventional circulator is made in a circular plane shape, if discrete circuit elements such as resonating capacitors or terminations are additionally attached to terminals on its side surfaces, a total size of the circulator will so much become larger.

Also, according to the conventional circulator, since the housing which constitutes a magnetic yoke is made by mechanically combining the separated upper and lower parts 20 and 21, a magnetic resistance of the magnetic path of exciting field will become extremely high and the assemble of the circulator will become very complicate.

There are some known structures of the circulator for increasing its inductance to lower its resonance frequency, as that coil lines are wound around a ferromagnetic material member or that ribbon looped electrodes are used. However, no circulator with the former structure winding the lines around the ferromagnetic material member has put to practical use because of its difficulty for mass production. Furthermore, although a small-sized circulator having the latter structure using the ribbon looped electrodes has been developed, this circulator has following problems.
(1) Since the coils are open, the circulator may be easily influenced by external electoro-magnetic fields. Thus, its housing and its magnets have to be disposed apart from each other resulting that practical downsizing of the circulator is very difficult.
(2) Since the ferromagnetic material member is prepared only at one side of the ribbon loop and thus the volume of the ferromagnetic material member will be insufficient, an enough difference of the permeability µ₊ and µ₋ will not be practically obtained.

A microwave circulator is known from DE-A-2917124 and a microstrip junction circulator for microwave integrated circuits is known from IEEE TRANSACTIONS ON MICROWAVE THEORY AND TECHNIQUES, vol. 15, no. 12, December 1967, pages 748-750.

### SUMMARY OF THE INVENTION

It is therefore an object of the present invention to provide a circulator which can be made in a smaller size.

Another object of the present invention is to provide a circulator which can be manufactured in a lower cost.

Further object of the present invention is to provide a circulator capable of operating in a broader frequency range.

Still further object of the present invention is to provide a circulator capable of operating with lower loss.

According to the present invention, a multi-layer circulator is provided as defined in claim 1.

Since the insulating ferromagnetic material body for closely surrounding the inner conductors is sintered into a single continuous layer, there is no discontinuous portion in this ferromagnetic material body. Thus, the RF magnetic flux will close in the circulator element resulting that no demagnetizing field will be produced and thus the difference between the permeability µ₊ and µ₋ will become large. As a result, broader operating frequency range and lower loss can be obtained with a smaller size circulator.

The insulating ferromagnetic material body is constituted by a ferromagnetic material having a sintering completion temperature higher than the melting point of the conductive material of the inner conductors.

In this case, the inner conductors may be made of a metal which was once converted in a molten state.

The inner conductors may be constituted by a conductive material having a melting point higher than a sintering completion temperature of a ferromagnetic material of the inflating ferromagnetic material body.

The insulating ferromagnetic material body may be formed in a single continuous layer by firing an upper ferromagnetic material layer, at least one intermediate ferromagnetic material layer and a lower ferromagnetic material layer, and the circulator element may include coil conductors having a pattern wound at least one turn around the at least one intermediate ferromagnetic material sheet. The above-mentioned inner conductors constitutes a part of the coil conductors. According to this constitution,
since the permeability µ₊ and µ₋ is large and also the number of turns of the coil is great (long length of the coil conductor), a necessary inductance can be obtained with a compact size.

Preferably, the coil conductors include the inner conductors formed on top surfaces of the intermediate ferromagnetic material layer and the lower ferromagnetic material layer, and jumper conductors for connecting ends of the inner conductors each other.

Preferably, the circulator element includes grounding conductors formed on a top surface of the upper ferromagnetic material layer and a bottom surface of the lower ferromagnetic material layer, respectively.

As a whole, a multi-layer circulator according to the present invention includes a circulator element with inner conductors having a predetermined pattern, made of a conductive material, and a insulating ferromagnetic material body closely surrounding the inner conductors, which insulating ferromagnetic material body is formed in a single continuous layer by firing a plurality of ferromagnetic material layers, a plurality of terminal electrodes formed on side surfaces of the circulator element and electrically connected to one ends of the inner conductors, a plurality of circuit elements electrically connected to the terminal electrodes, and exciting permanent magnets for applying a dc magnetic field to the circulator element.

According to the present invention, a multi-layer circulator also includes as a whole a circulator element with inner conductors having a predetermined pattern, made of a conductive material, a insulating ferromagnetic material body closely surrounding the inner conductors, which insulating ferromagnetic material body is formed in a single continuous layer by firing an upper ferromagnetic material layer, at least one intermediate ferromagnetic material layer and a lower ferromagnetic material layer, and coil conductors having a pattern wound at least one turn around the at least one intermediate ferromagnetic material sheet, the inner conductors constituting a part of said coil conductors, a plurality of terminal electrodes formed on the side surfaces of the circulator element and electrically connected to one ends of the inner conductors, a plurality of circuit elements electrically connected to the terminal electrodes, and exciting permanent magnets for applying a dc magnetic field to the circulator element.

It is preferred that the circuit elements are a plurality of capacitor electrically connected to the respective terminal electrodes, for resonating with an applied frequency.

The circuit elements may be discrete circuit elements additionally attached and electrically connected to the respective terminal electrodes, or may be internal circuit elements integrally formed with the circulator element.

It is preferred that the circulator further includes a metal housing closely fixed to the exciting permanent magnets. This metal housing has a continuous magnetic path. Since the exciting magnetic path is continuous, a smaller magnetic resistance can be obtained causing its characteristics to extremely improve.

The circulator element may have a polygonal plane shape, preferably a hexagonal plane shape. Thanks for the polygonal plane shape of the circulator element, spaces for attaching discrete circuit elements such as resonating capacitors or termination resisters will remain on side surfaces of the circulator element. Therefore, if such the discrete circuit elements are additionally attached to the circulator element, a total size of the circulator can be maintained in small.

It is preferred that the inner conductors have a pattern with a plurality of strips extending, in a plane, to a plurality of symmetrical radiating directions, respectively.

In this case, the strips may include straight strips.

It is also preferred that the inner conductors have a pattern with at least one straight strip extending, in a plane, to a predetermined direction.

Further objects and advantages of the present invention will be apparent from the following description of the preferred embodiments of the invention as illustrated in the accompanying drawings.

### BRIEF DESCRIPTION OF THE DRAWINGS

Fig. 1 is an exploded oblique view showing the already described circulator element of the conventional lumped element type circulator;
Fig. 2 is an exploded oblique view illustrating the assemble of the already described conventional circulator;
Fig. 3 shows a characteristics of gyromagnetic permeability of the ferromagnetic material;
Fig. 4 is a partially cut away view in an oblique schematically showing a circulator element of a three-port circulator as an preferred embodiment according to the present invention;
Fig. 5 is an exploded oblique view showing the circulator using the circulator element of Fig. 4;
Fig. 6 is an equivalent circuit diagram showing the circulator of Fig. 5;
Figs. 7a, 7b and 7c illustrate a part of manufacturing processes of the circulator element shown in Fig. 4;
Fig. 8 is an exploded oblique view showing an arrangement example of the circulator elements on ferromagnetic material sheets;
Fig. 9 is an oblique view showing an another arrangement example of the circulator elements on a ferromagnetic material sheet;
Figs. 10a and 10b are plane arrangement views illustrating a dicing process of the circulator elements on a ferromagnetic material sheet;
Figs. 11a, 11b and 11c are exploded oblique views and an oblique view illustrating a structure of a housing and a structure of the circulator with the circulator element and exciting permanent magnets assembled in the housing;
Fig. 12 illustrates insertion loss characteristics of the circulator of Fig. 4 and the conventional circulator;
Fig. 13 is an exploded oblique view schematically showing a circulator element as an another embodiment of a three-port circulator according to the present invention;
Fig. 14 is an exploded oblique view schematically showing a circulator element as a further embodiment of a three-port circulator according to the present invention;
Figs. 15a, 15b, 15c, 15d and 15e are exploded oblique views and oblique views schematically illustrating a circulator element, a three-port circulator and a structure of resonating capacitor to be attached to the circulator as a still further embodiment of the circulator according to the present invention;
Fig. 16 is an exploded oblique view schematically showing a circulator element as an another embodiment of a three-port circulator according to the present invention;
Fig. 17 is an exploded oblique view schematically showing a circulator element as a further embodiment of a three-port circulator according to the present invention;
Fig. 18 is an exploded oblique view schematically showing a circulator element as an another embodiment of a three-port circulator according to the present invention;
Fig. 19 is an exploded oblique view schematically showing a part of a three-port circulator as an another embodiment according to the present invention;
Fig. 20 is an exploded oblique view schematically showing a part of a three-port circulator as a further embodiment according to the present invention;
Fig. 21 is an equivalent circuit diagram of the circulator shown in Fig. 20;
Fig. 22 is a partially cut away view in an oblique schematically showing a circulator element of a three-port circulator as a still another embodiment according to the present invention;
Fig. 23 is an exploded oblique view showing the circulator element of Fig. 22;
Fig. 24 is an exploded oblique view showing the circulator using the circulator element of Fig. 22;
Figs. 25a, 25b and 25c illustrate a part of manufacturing processes of the circulator element shown in Fig. 22;
Fig. 26 is an exploded oblique view showing an arrangement example of the circulator elements on ferromagnetic material sheets;
Fig. 27 is an exploded oblique view schematically showing a circulator element as a further embodiment of a three-port circulator according to the present invention;
Fig. 28 is an exploded oblique view schematically showing a circulator element as a still further embodiment of a three-port circulator according to the present invention;
Fig. 29 is an exploded oblique view schematically showing a circulator element as an another embodiment of a three-port circulator according to the present invention;
Fig. 30 is an oblique view schematically showing a circulator element as a further embodiment of a three-port circulator according to the present invention;
Figs. 31a, 31b and 31c are an oblique view, an exploded oblique view and a side view schematically illustrating a circulator element and a structure of resonating capacitor to be attached to the circulator as a still further embodiment of the circulator according to the present invention; and
Fig. 32 is an exploded oblique view schematically showing a circulator element as an another embodiment of a three-port circulator according to the present invention.

### DESCRIPTION OF THE PREFERRED EMBODIMENTS

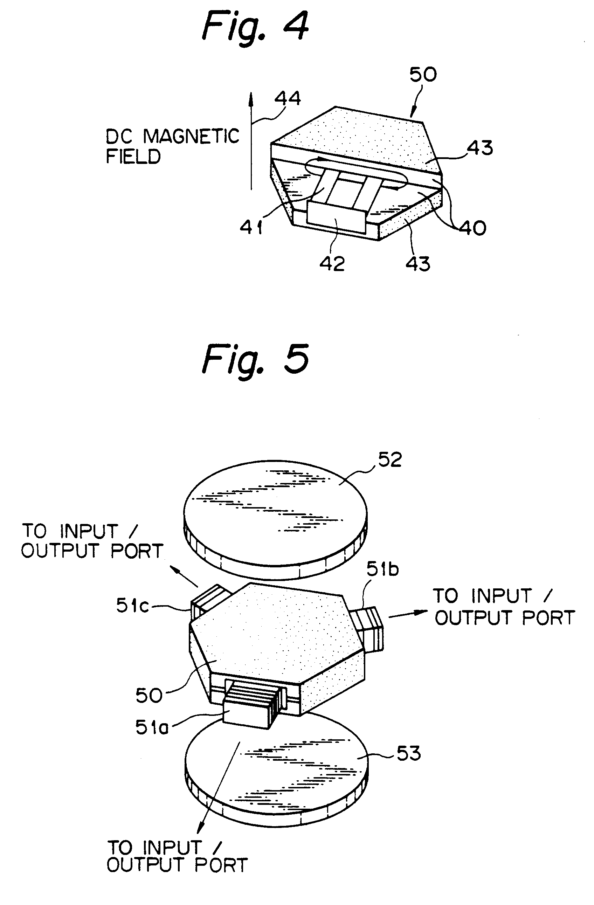

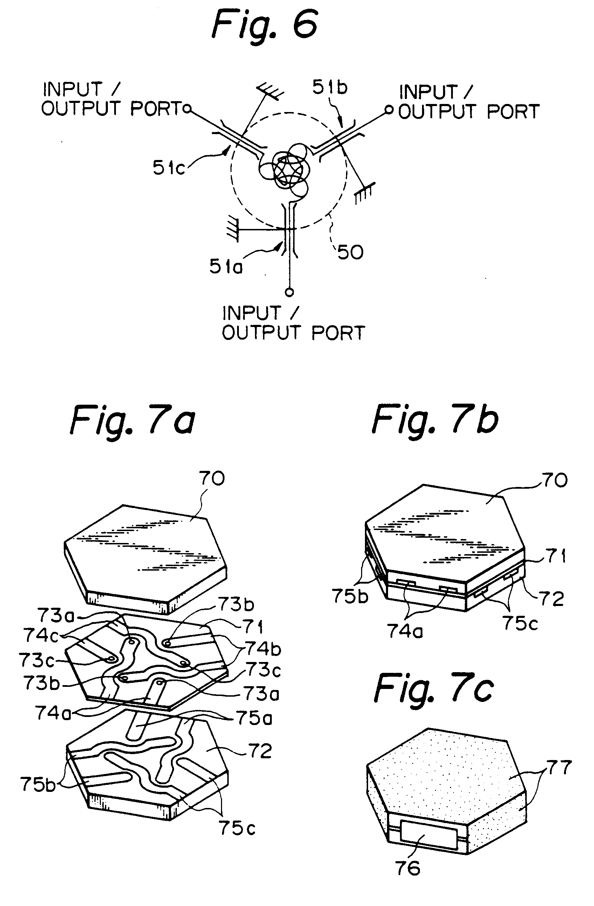

Fig. 4 schematically shows a circulator element of a three-port circulator as an preferred embodiment according to the present invention, Fig. 5 shows the circulator using this circulator element, Fig. 6 shows an equivalent circuit of this circulator, and Figs. 7a, 7b and 7c illustrate a part of manufacturing processes of the circulator element.

As shown in these figures, the circulator of this embodiment is a three-port circulator and its circulator element is formed with a plane shape of a regular hexagon. However, the plane shape of this element may be formed in any hexagonal shape or another polygonal shape so far as a symmetrical rotating magnetic field can be produced. Thanks for the polygonal plane shape of the circulator element, spaces for attaching discrete circuit elements such as resonating capacitors or termination resisters will remain on side surfaces of the circulator element. Therefore, if such the discrete circuit elements are additionally attached to the circulator element, a total size of the circulator can be maintained in small.

In Fig. 4, a reference numeral 40 denotes an integral ferromagnetic material body sintered into a single continuous layer. Inner conductors (center conductors) 41 with a predetermined pattern are formed so as to be surrounded by the ferromagnetic material body 40. As shown in Fig. 7a, the inner conductors 41 in this embodiment are formed on two laminated ferromagnetic material layers. On each layer (in a plane), the inner conductors are patterned in three pairs of strips extending to symmetrical radiating directions (directions perpendicular to at least one side of the hexagon). The strip coil pattern on the both layers extending the same directions are electrically connected by via hole conductors each other, respectively. In this structure, the ferromagnetic material layers are also utilized as insulating layers. One ends of the inner conductors 41 are electrically connected to terminal electrodes 42 formed on every other side surfaces of the ferromagnetic material body 40, respectively. Grounding conductors (grounding electrodes) 43 are formed on a top surface and a bottom surface and also on the remaining side surfaces of the ferromagnetic material body 40. The other ends of the inner conductors 41 are electrically connected to the grounding conductors 43 on the side surfaces, respectively.

As shown in Fig. 5, the circulator has resonating capacitors 51a, 51b and 51c electrically connected to the three terminal electrodes (42) formed on the side surfaces of the circulator element 50, respectively. These capacitors 51a, 51b and 51c may be high frequency feed through capacitors having a high self-resonance frequency, described in Japanese unexamined patent publication No.5(1993)-251262 filed by the same applicant (assignee) as this application. This high frequency capacitor has a multi-layer triplate strip line structure constituted by laminating at least two multi-layer units, a grounding conductor and dielectric layer in this order. Each of the multi-layer unit is formed by laminating a grounding conductor, a dielectric layer, an inner conductor and a dielectric layer in this order. By using such the feed through capacitor having a broader operating frequency range, no reduction of Q can be expected. Fig. 6 shows an equivalent circuit of the circulator with these feed through resonating capacitors 51a, 51b and 51c.

On and under the circulator element 50, exciting permanent magnets 52 and 53 for applying a dc magnetic field 41 (shown in Fig. 4) to this circulator element 50 are attached,
respectively. Assembling of a housing not shown in Fig. 5 and the permanent magnets 52 and 53 with the circulator element 50 will be described in detail later.

Hereinafter, manufacturing processes of the circulator according to this embodiment will be described.

As shown in Fig. 7a, an upper ferromagnetic material sheet 70 having a thickness of about 1 mm, an intermediate ferromagnetic material sheet 71 having a thickness of about 160 µm and a lower ferromagnetic material sheet 72 having a thickness of about 1 mm are prepared. The upper and lower ferromagnetic material sheets 70 and 72 are formed by laminating a plurality of sheets with a thickness in general of 100 to 200 µm (preferably 160 µ). These ferromagnetic material sheets are made of the same insulating ferromagnetic material. This ferromagnetic material may be yttrium iron garnet (hereinafter called as YIG) and the ferromagnetic material sheets will be made of YIG, a binder and a solvent with the following ratio of components.

| | |
|---|---|
| YIG powder | 61.8 weight % |
| binder | 5.9 weight % |
| solvent | 32.3 weight % |

Via holes 73a, 73b and 73c passing through the intermediate sheet 71 are formed at predetermined positions of this sheet 71. At each via hole position, a via hole conductor having a diameter larger than that of the via hole is formed by printing or transferring.

On top surfaces of the intermediate sheet 71 and the lower sheet 72, upper inner conductors 74a, 74b and 74c and lower inner conductors 75a, 75b and 75c are formed. These inner conductors 74a, 74b and 74c (75a, 75b and 75c) have three pairs of strip patterns. Each pair of strip patterns extends to the same radiating direction (a direction perpendicular to at least one side of the hexagon) by stepping aside from the via holes of another strip pattern. These inner conductors may be formed by printing or transferring of silver paste, palladium paste or silver-palladium paste. Thus formed upper sheet 70, intermediate sheet 71 and lower sheet 72 are stacked in this order and then the stacked sheets are hot-pressed. As a result, a trigonally symmetric coil pattern can be formed on the front and rear surfaces of the intermediate sheet 71 so that propagation characteristics between the ports of the three-port circulator will be identical with each other.

Thereafter, the stacked upper sheet 70, intermediate sheet 71 and lower sheet 73 are fired at a temperature such as 1450°C for example, which is equal to or higher than the melting point of the inner conductor material (about 960°C when the inner conductor material is silver). This firing process may be carried out one time or more than one time. If a plurality of firing processes are carried out, at least one of the firing must be executed at a temperature equal to or higher than the melting point of the inner conductor material. According to this firing, the ferromagnetic material layers constituting the upper sheet 70, intermediate sheet 71 and lower sheet 73 are integrally formed into a single continuous layer.

Since the sintering completion temperature of the ferromagnetic material YIG is equal to or above the melting point of the inner conductor material (silver or silver-palladium for example), during the firing process, the inner conductor material will be first melted in an airtight state and then the YIG will be sintered. Such the inner conductor melting method for manufacturing an effective microwave circuit element is described in Japanese unexamined patent publications Nos.5(1993)-183314 and 5(1993)-315757 and US patent application serial No.07/885,639 filed by the same applicant (assignee) as this application. According to the inner conductor melting method, an insulating body and inner conductors are co-fired at a temperature equal to or higher than the melting point of the conductors so that the inner conductors are once converted into a molten state and eventually densified to substantially eliminate grain boundaries attributable to conductor particles used, thereby reducing a propagation line loss. The conductor powder (silver powder) of the paste for the inner conductors may contain equal to or more than 90 % by weight, preferably 99 % by weight, of pure conductor material (silver). The conductor paste preferably contains 60 to 95 % by weight, more preferably 70 to 90 % by weight of conductor powder. In order to minimize the development of a network structure after melting of the conductors, equal to or less than 30 mol % of a glass frit having a softening temperature near the melting point of the conductor powder may be added to the conductor powder.

For the via hole conductors, although the same metal paste as that for the inner conductors (silver paste for example) can be used, it is preferred to use another conductor material having a melting point higher than that of the inner conductor material. For example, palladium paste may be used for the via hole conductors when the inner conductors are made of silver. By properly selecting the via hole conductor material and the inner conductor material and also the firing temperature, electrical properties of the inner conductors can be improved. This technique is described in Japanese unexamined patent publications No.5(1993)-327221 and US patent application serial No.07/885,639 filed by the same applicant (assignee) as this application. According to this technique, a metal having a melting point (about 1555°C in pure palladium) higher than a sintering completion temperature of the insulating ferromagnetic material (about 1450°C in YIG) is used for the via hole conductor material and the firing temperature is set higher than the melting point of the inner conductor material and lower than the melting point of the via hole conductor material (1450°C for example). Thus, in firing the ferromagnetic material sheets, the via hole conductors which will not melted at this temperature serves as plugs for preventing a loss of the inner conductor material from the sheets causing any degradation of electrical properties due to this loss of the conductor material to prevent.

By the above-mentioned firing processes, one ends of the upper inner conductors 74a, 74b and 74c are electrically connected to one ends of the lower inner conductors 75a, 75b and 75c through the via hole conductors in the via holes 73a, 73b and 73c, respectively.

In Fig. 7a, each of the upper ferromagnetic material sheet 70, intermediate ferromagnetic material sheet 71 and lower ferromagnetic material sheet 72 is illustrated in a regular hexagonal sheet already separated from that for another circulator element. In fact, it is preferred for mass-production that the stacked and heat-pressed ferromagnetic material sheets each of which has printed inner conductors and via hole conductors for a plurality of the circulator elements is diced into every circulator element before or after the sintering (firing). If it is diced before sintering, many of the diced circulator elements having a hexagonal shape as shown in Fig. 7a are sintered. Whether the dicing should be carried out before or after the sintering will be determined in accordance with the metal used for the inner conductors and with the dicing method. For example, if silver is used for the inner conductors, the dicing will be carried out after the sintering so as to prevent a loss of the molten silver. If palladium is used for the inner conductors, dicing can be executed before the sintering.

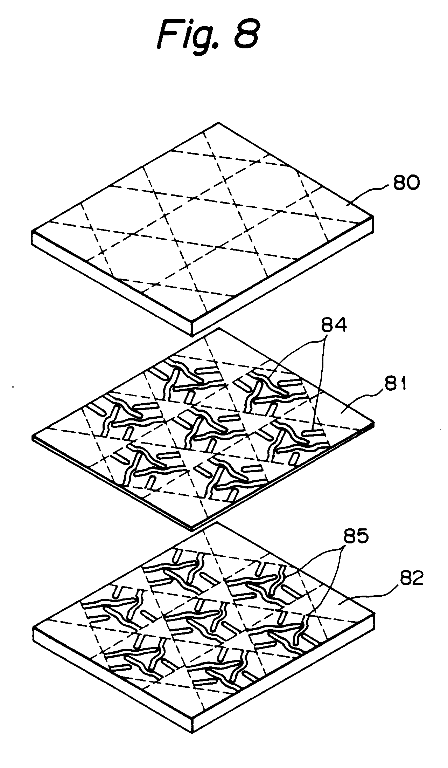

Fig. 8 shows an arrangement example of the circulator elements on ferromagnetic material sheets. As shown this figure, an upper ferromagnetic material sheet 80, an intermediate ferromagnetic material sheet 81 and a lower ferromagnetic material sheet 82 are prepared and many inner conductors 84 and 85 are printed on top surfaces of the intermediate and lower sheets 81 and 82, respectively. These sheets 80, 81 and 82 are then stacked and sintered and thereafter are diced into each circulator element. The arrangement of the circulator elements on the sheets shown in Fig. 8 has advantages that dicing is easy because of straight line dicing and thus the dicing can be carried out after sintering, but has a disadvantage that waste area of the sheets is not a little.

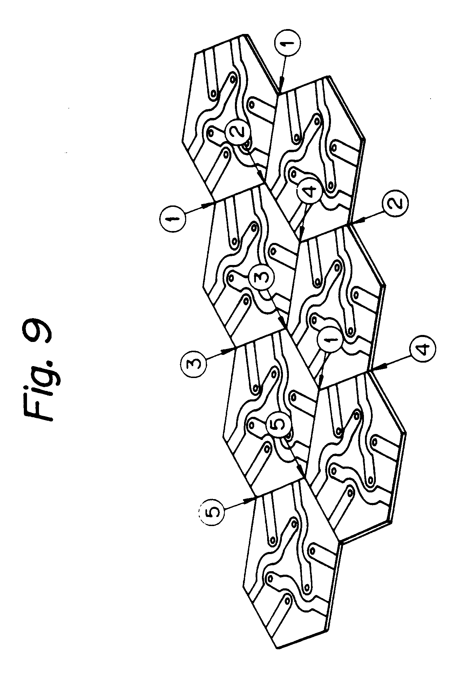

Fig. 9 shows an another arrangement example of the circulator elements on a ferromagnetic material sheet. According to this arrangement, circulator elements of a hexagonal shape are closely arranged so that there is no space between the adjacent circulator elements, and thus the ferromagnetic material sheet will be effectively utilized without wasting. In Fig. 9, reference numerals described in circles denote an order of dicing. As will be apparent from the figure, the dicing process may be somewhat complicated if the sheet is diced with this order.

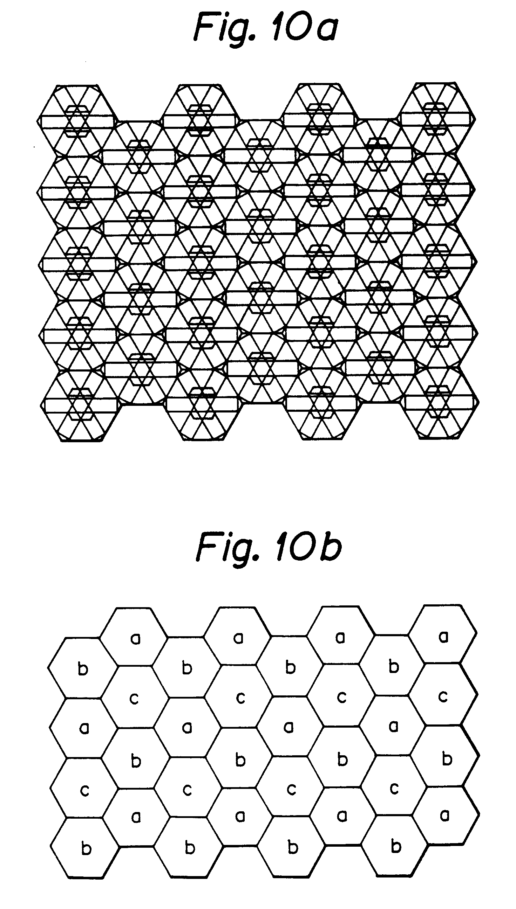

Figs. 10a and 10b show plane views of a ferromagnetic material sheet on which the circulator elements are arranged for illustrating a dicing process of the circulator elements. The arrangement of the circulator elements on the ferromagnetic material sheet shown in Figs. 10a and 10b is the same as the arrangement example shown in Fig. 9. To manufacture circulator elements according to this example, patterns for the respective circulator elements are printed on the ferromagnetic material sheets so that these circulator elements of a hexagonal shape are closely arranged and that there is no space between the adjacent circulator elements at first, and then the sheets are stacked. Snap grooves are formed on the stacked sheet along the boundary of the hexagons. Thereafter, the stacked sheet is punched by one punching operation to separate a plurality of hexagonal circulator element portions a shown in Fig. 10b from the stacked sheet. Then, the stacked sheet is punched by another one punching operation to separate a plurality of hexagonal circulator element portions b shown in Fig. 10b from the stacked sheet. By the above-mentioned two punching operations, a plurality of remaining hexagonal circulator element portions c can be also separated, and thus all the circulator elements are diced from the stacked sheet. Such the diced circulator elements are then sintered.

After the dicing and sintering processes, each the circulator element is barrel polished so that necessary inner conductors are appeared on the side surface of the circulator element as shown in Fig 7b. Then, corners of the sintered circulator element are chamfered. Thereafter, as shown in Fig. 7c, terminal electrodes 76 are formed by baking on every other side surfaces of the circulator element, respectively, and grounding conductors 77 are formed on a top surface and a bottom surface and also on the remaining side surfaces of the circulator element by baking. As a result, the other ends of the upper inner conductors 74a, 74b and 74c, which are appeared on the side surfaces of the circulator element, are electrically connected to the terminal electrodes (76), respectively. Also, the other ends of the lower inner conductors 75a, 75b and 75c, which are appeared on the side surfaces of the circulator element, are electrically connected to the grounding conductors (77).

The circulator element thus manufactured has a plane shape in a regular hexagon inscribed in a circle with 4 mm diameter and has a thickness of 1 mm. The resonating capacitors 51a, 51b and 51c are mounted and soldered by a reflow soldering to the terminal electrodes (76) of the circulator element, respectively, as shown in Fig. 5. A circulator is then finished by assembling exciting permanent magnets for applying a dc magnetic field and a metal housing operating also as a magnetic yoke, with the circulator element.

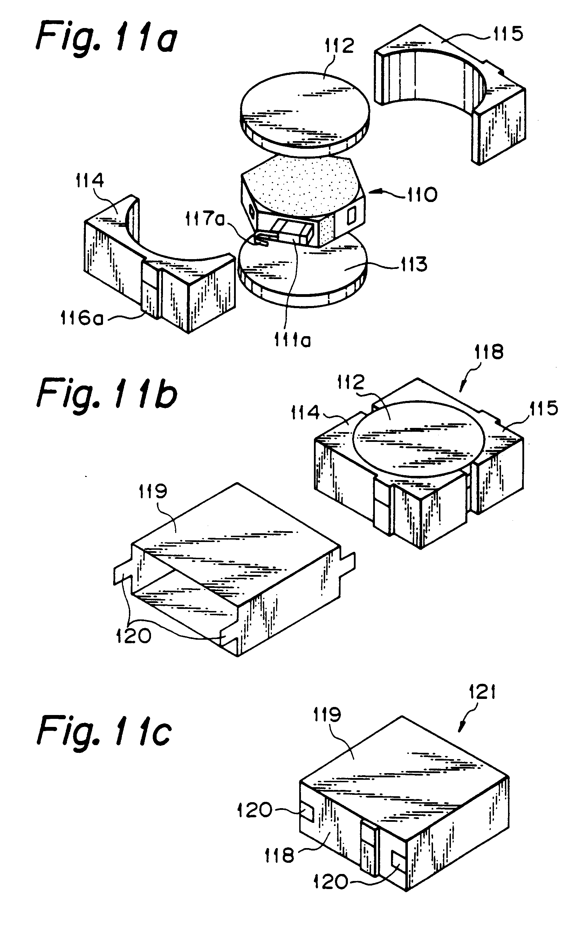

Figs. 11a, 11b and 11c illustrate a structure of a housing and a structure of the circulator with the circulator element and exciting permanent magnets assembled in the housing. In assembling a circulator, as shown in Fig. 11a, the exciting permanent magnets 112 and 113 are stacked respectively on and under the circulator element 110 which has the resonating capacitors 111a attached to its side surfaces. Then, the stacked block of the circulator element 110 and the permanent magnets 112 and 113 are sandwiched and supported between support members 114 and 115 made of an insulating material as shown in Fig. 11b. At this time, elastic connection leads 117a with cream solder are mechanically caught between input/output terminals 116a formed in the insulating support members 114 and 115 and the resonating capacitors 111a attached to the circulator element 110 or terminal electrodes formed on the side surfaces of the circulator element 110, respectively. The connection lead 117a may be constituted by a U-turned elastic thin strip of copper for example. The insulating support member 114 (115) is formed by molding ceramic, glass reinforced epoxy or another plastic material capable of resisting to high temperature.

Then, as shown in Figs. 11b and 11c, the assembly 118 constituted by the stacked block and the insulating support members 114 and 115 is closely inserted into a metal housing 119 and fixed in the housing 119 by bending projected tongue portions 120. Thus, the metal housing 119 and the permanent magnets 112 and 113 are closely contacted with each other. The metal housing 119 is made of a metal capable of operating as a magnetic yoke and the surface of the housing is plated by nickel or chromium. The metal housing 119 itself has substantially a square drum shape with integrally surrounding four faces and opened two opposite faces.

The assembly 118 thus fixed in the housing 119 will be passed through a reflow soldering oven and soldered so that the connection leads 117a are electrically connected to the input/output terminals 116a and to the resonating capacitors 111a or the terminal electrodes, respectively. Fig. 11c shows the finished circulator 121.

Operating frequency range and loss of the circulator is mainly determined by the performance of its circulator element. Larger difference between the permeability µ₊ and µ₋ and also lower coil resistance and lower magnetic loss tangent will result broader operating frequency range and lower loss of the circulator element. The circulator according to this embodiment using the inner conductor melting method can obtain following advantages.
(1) Since the ferromagnetic material layers are sintered into a single continuous layer, the RF magnetic flux will close in the circulator element. Therefore, no demagnetizing field will be produced and thus the difference between the permeability µ₊ and µ₋ will become large. As a result, higher inductance can be obtained causing the circulator to downsize.
(2) Since the ferromagnetic material layers are sintered into a single continuous layer, the RF magnetic flux will close in the circulator element. Therefore, no demagnetizing field will occur and thus the difference between the permeability µ₊ and µ₋ will become larger resulting broader operating frequency range.
(3) The inner conductors are formed by the inner conductor melting method. Therefore, its resistance will be low resulting lower loss.
(4) Since the structure of the circulator element is proper for mass production, a sharp reduction in the manufacturing cost can be expected.
(5) Since the magnetic yoke constituted by the metal housing is united without separation and has a continuous magnetic path and also the magnetic yoke is closely contacted to the exciting permanent magnets, the exciting magnetic path is continuous without break. Thus, the magnetic resistance in the magnetic path will become extremely lower resulting excellent characteristics of the circulator.

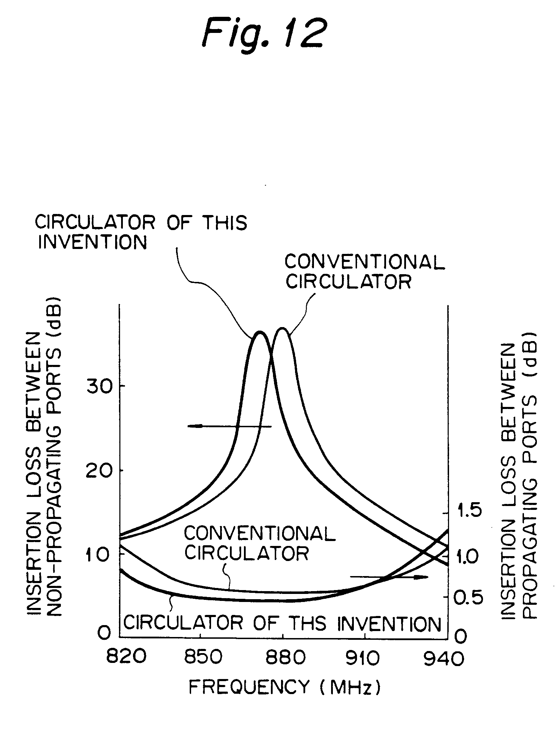

Fig. 12 illustrates insertion loss characteristics of the circulator of Fig. 4 and the conventional circulator having the same size as that of the former one. In the figure, the latitudinal axis indicates frequency and the longitudinal axis indicates an insertion loss between non-propagating ports and an insertion loss between propagating ports. It is apparent from this figure that the circulator according to the embodiment of Fig. 4 (the inner conductor melting method is used) has lower center operating frequency and lower loss than the conventional circulator.

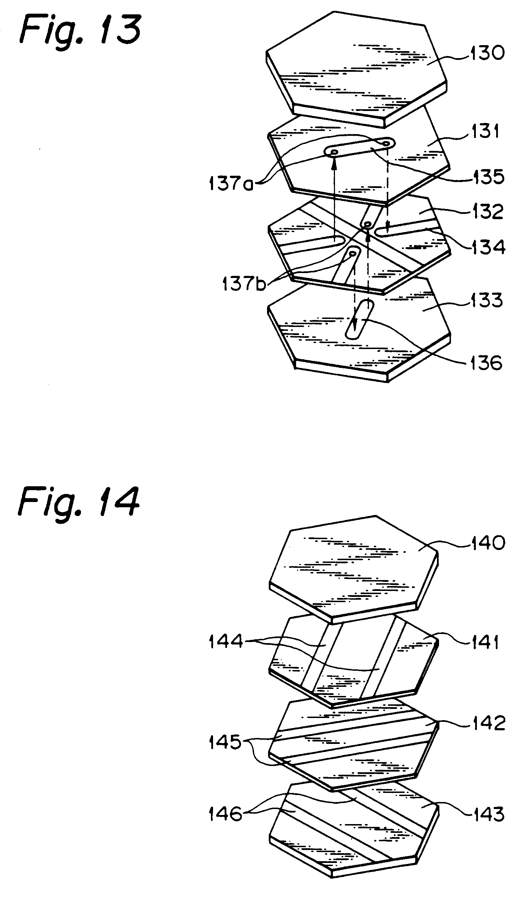

Fig. 13 schematically shows a circulator element of a three-port circulator as an another embodiment according to the present invention. In this embodiment, the constitution of inner conductors (center conductors) differ from that in the embodiment of Fig. 4. As shown in Fig. 13, an upper ferromagnetic material sheet 130, a first intermediate ferromagnetic material sheet 131, a second intermediate ferromagnetic material sheet 132 and a lower ferromagnetic material sheet 133 are prepared. These ferromagnetic material sheets are made of the same insulating ferromagnetic material.

On a top surface of the second intermediate sheet 132, inner conductors (coil conductors) 134 having three straight strips are formed. These strips extend to symmetrical radiating directions (directions perpendicular to at least one side of the hexagon). On top surfaces of the first intermediate sheet 131 and the lower sheet 133, inner conductors 135 and 136 having a cross over pattern are formed, respectively. Via holes 137a and 137b passing through the first and second intermediate sheets 131 and 132, respectively, are formed at predetermined positions of these sheets. At each via hole position, a via hole conductor having a diameter larger than that of the via hole is formed. To form driving lines, the strips of the inner conductors 134 formed on the second intermediate sheet 132 are connected to the cross over inner conductors 135 and 136 by the via hole conductors 137a and 137b, respectively.

As well as the embodiment of Fig. 4, thus formed upper sheet 130, first intermediate sheet 131, second intermediate sheet 132 and lower sheet 133 are stacked in this order and then sintered into a single continuous layer. An ferromagnetic material and conductor material of this embodiment and also another manufacturing method in this embodiment are the same as those of the embodiment of Fig. 4.

According to this embodiment of Fig. 13, since the inner conductors 134 have three straight strip patterns each of which extends to a different direction and most of the driving lines are made on the same plane, excellent high frequency symmetry of the three ports can be expected. Furthermore, thanks for small number of the via holes, not only manufacturing of the circulator becomes easy but also increasing of the insertion loss can be suppressed.

Fig. 14 schematically shows a circulator element of a three-port circulator as a further embodiment according to the present invention. In this embodiment also, the constitution of inner conductors (center conductors) differ from that in the embodiment of Fig. 4. As shown in Fig. 14, an upper ferromagnetic material sheet 140, a first intermediate ferromagnetic material sheet 141, a second intermediate ferromagnetic material sheet 142 and a lower ferromagnetic material sheet 143 are prepared. These ferromagnetic material sheets are made of the same insulating ferromagnetic material.

On top surfaces of the first and second intermediate sheets 141 and 142 and the lower sheet 143, upper layer inner conductors (coil conductors) 144, intermediate layer inner conductors 145 and lower layer inner conductors 146 are formed, respectively. The three-layer inner conductors 144, 145 and 146 have pairs of straight strip patterns extending to symmetrical radiating directions different from each other (directions parallel to at least one side of the hexagon). No via hole is formed in these sheets.

As well as the embodiment of Fig. 4, thus formed upper sheet 140, first intermediate sheet 141, second intermediate sheet 142 and lower sheet 143 are stacked in this order and then sintered into a single continuous layer. An ferromagnetic material and conductor material of this embodiment and also another manufacturing method in this embodiment are the same as those of the embodiment of Fig. 4.

According to this embodiment of Fig. 14, since the driving lines are constituted by the inner conductors formed on the three respective layers without via hole, manufacturing of the circulator can be easier and increasing of the insertion loss can be effectively suppressed. However, because of the three-layer structure, input impedances of the ports may differ from each other and thus reduction of the propagation characteristics such as increasing of the insertion loss due to reflections or reduction of the isolation may easily occur. Therefore, in such the three-layer structure, the width of the upper layer and lower layer inner conductors 144 and 146 is preferably different value from the width of the intermediate layer inner conductors 145 so that the input impedances of the ports are equal to each other.

In Fig. 14, although the inner conductor on the each sheet is constituted by a pair of straight strip patterns extending in parallel, this inner conductor can be formed in a single straight strip pattern. In the latter case also, it is preferred that the width of the upper and lower inner conductors differs from that of the intermediate inner conductor to match the impedance.

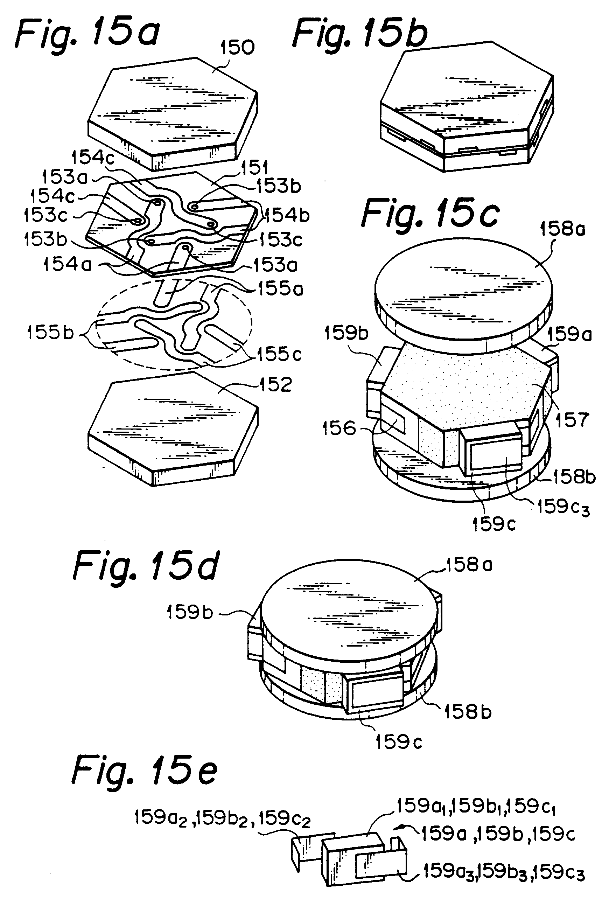

Figs. 15a to 15e illustrate a circulator element, a three-port circulator and a structure of resonating capacitor to be attached to the circulator as a still further embodiment of the circulator according to the present invention. In this embodiment, the constitution of inner conductors (center conductors) is substantially the same as that in the embodiment of Fig. 4 except that strip patterns of inner conductors in this embodiment extend to a direction parallel to at least one side of the hexagon.

As shown in Fig. 15a, on top and bottom surfaces of an intermediate ferromagnetic material sheet 151, upper inner conductors (coil conductors) 154a, 154b and 154c and lower inner conductors 155a, 155b and 155c are formed, respectively. On each surface, the inner conductors are patterned in three pairs of strips extending to the symmetrical radiating directions (directions parallel to at least one side of the hexagon). Via holes 153a, 153b and 153c passing through the intermediate sheet 151 are formed at predetermined positions of this sheet 151.

As well as the embodiment of Fig. 4, an upper ferromagnetic material sheet 150, the intermediate sheet 151 and a lower ferromagnetic material sheet 152 are stacked in this order and then sintered into a single continuous layer. By this firing processes, one ends of the upper inner conductors 154a, 154b and 154c are electrically connected to one ends of the lower inner conductors 155a, 155b and 155c through the via hole conductors in the via holes 153a, 153b and 153c, respectively. A circulator element after firing is indicated in Fig. 15b. An ferromagnetic material and conductor material of this embodiment and also another manufacturing method in this embodiment are the same as those of the embodiment of Fig. 4.

Then, as shown in Fig. 15c, terminal electrodes 156 are formed by baking on a part of side surfaces of the circulator element, respectively. Grounding conductors 157 are formed on the most part of a top surface and a bottom surface except for portions near the terminal electrodes 156 and also on a part of the side surfaces of the circulator element by baking. As a result, the other ends of the upper inner conductors 154a, 154b and 154c, which are appeared on the side surfaces of the circulator element, are electrically connected to the grounding conductors (157). Also, the other ends of the lower inner conductors 155a, 155b and 155c, which are appeared on the side surfaces of the circulator element, are electrically connected to the terminal electrodes (156), respectively.

The circulator element thus manufactured has a plane shape in a regular hexagon inscribed in a circle with 4 mm diameter and has a thickness of 1 mm. Resonating capacitors 159a, 159b and 159c are mounted and soldered by a reflow soldering to the terminal electrodes (156) and to the grounding conductors (157) on the side surfaces of the circulator element, respectively, as shown in Fig. 15c. A circulator is then finished by assembling exciting permanent magnets 158a and 158b for applying a dc magnetic field and a metal housing operating also as a magnetic yoke, which is the same as the metal housing already illustrated with reference to Figs. 11a to 11c, with the circulator element. Fig. 15d shows the circulator element assembly with the exciting permanent magnets 158a and 158b and with the resonating capacitors 159a, 159b and 159c.

Each of the resonating capacitors 159a, 159b and 159c is a feed through capacitor constituted by a dielectric material block 159a₁ (159b₁, 159c₁), a grounding electrode 159a₂ (159b₂, 159c₂) formed on the rear and side surfaces of the dielectric block 159a₁ and an input/output electrode 159a₃ (159b₃, 159c₃) formed on the front, rear and side surfaces of the dielectric block 159a₁, as shown in Fig. 15e. Such the capacitors 159a, 159b and 159c are attached to the side surfaces of the circulator element so that their input/output electrode 159a₃, 159b₃ and 159c₃ are appeared toward radiating directions of the circulator element as shown in Fig. 15d. Accordingly, the connection lead (117a) shown in Fig. 11a for connecting these input/output electrode 159a₃, 159b₃ and 159c₃ with the input/output terminals formed in the insulating support members (114 and 115) can be very easily mounted.

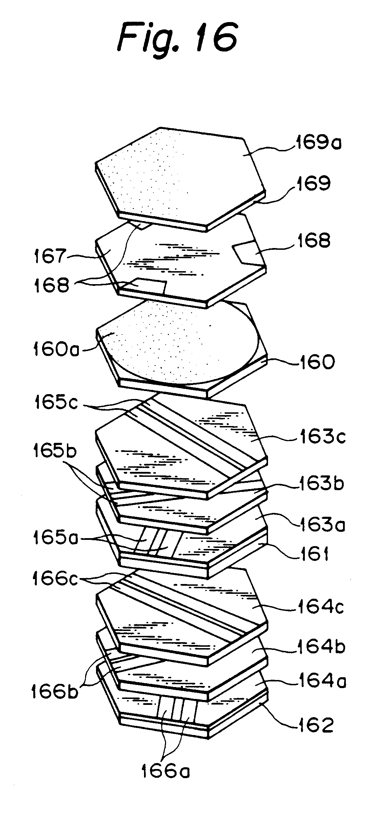

Fig. 16 schematically shows a circulator element of a three-port circulator as an another embodiment according to the present invention. In this embodiment, a dielectric material sheet and capacitor electrodes having the same shape as that of ferromagnetic material sheets are stacked on a circulator element so as to integrally form resonating capacitors with the circulator element.

A circulator element portion in this embodiment is constituted by three of two turned coil conductors substantially surrounded by an insulating ferromagnetic material body. Namely, as shown in Fig. 16, the circulator element portion has an upper ferromagnetic material sheet 160, an intermediate ferromagnetic material sheet 161, a lower ferromagnetic material sheet 162, and ferromagnetic material substrate sheets 163a, 163b, 163c, 164a, 164b and 164c with inner conductors. These ferromagnetic material sheets made of the same insulating ferromagnetic material are stacked and sintered into a single continuous layer.

On top surfaces of the substrate sheets 163a, 163b, 163c, 164a, 164b and 164c, upper inner conductors (parts of coil conductors) 165a, 165b and 165c, and lower inner conductors 166a, 166b and 166c are formed, respectively. Each of the inner conductors has straight strips extending to a predetermined direction (a direction nearly perpendicular to at least one side of the hexagon), the number of the strips corresponding to the number of turns of the coil. Each strip of the upper inner conductors 165a and of the lower inner conductors 166a will be electrically connected in sequence by coil jumper conductors (not shown) for connecting their ends which will appear from the side surfaces of the circulator element after sintering, so as to form the aforementioned two turned coil conductor. Another two turned coil conductors will be formed by the upper inner conductors 165b and the lower inner conductors 166b, the upper inner conductors 165c and the lower inner conductors 166c, and not shown coil jumper conductors. On a top surface of the upper sheet 160 and on a bottom surface of the lower sheet 162, grounding conductors for the circulator element will be formed, respectively.

No via hole is formed in the sheets. An ferromagnetic material and conductor material of this embodiment and also another manufacturing method of the circulator element portion in this embodiment are the same as those of the embodiment of Fig. 4. The circulator element portion may be formed in another structure as shown in Fig. 4, Fig. 13, Fig. 14 or Fig. 15a.

A resonating capacitor portion in this embodiment is constituted by the grounding conductor 160a for the circulator element, formed on the top surface of the upper sheet 160, a first dielectric material sheet 167 laminated thereon with the same regular hexagonal shape as the circulator element portion, a capacitor electrodes 168 formed on a top surface of this dielectric sheet 167, a second dielectric material sheet 169 laminated thereon with the same regular hexagonal shape as the circulator element portion, and a capacitor grounding electrode 169a formed on a top surface of this dielectric sheet 169. The capacitor electrodes 168 are connected to one ends of the coil conductors by capacitor jumper conductors (not shown) formed on the side surfaces of the circulator element, respectively. A part of the grounding conductor 160a for the circulator element is omitted so as to prevent the capacitor jumper conductors from short-circuiting with it. This grounding conductor 160a also operates as a capacitor grounding electrode. Thus, between the capacitor electrodes 168 and the capacitor grounding electrode 169a and between the capacitor electrodes 168 and the grounding electrode 160a, capacitors are formed respectively. However, if the capacitance value of the capacitors are enough for operating, the second dielectric material sheet 169 and the capacitor grounding electrode 169a may be omitted. In this case, the capacitor electrodes 168 may be used as output terminals for the respective ports.

In this embodiment, the circulator element portion and the resonating capacitor portion are fired together after stacking them. However, if it is difficult to co-fire the both portions because sintering characteristics of the dielectric material is different from that of the ferromagnetic material, it is preferred that the circulator element portion and the resonating capacitor portion are individually sinterd and thereafter they are coupled with each other by soldering. In the latter case, it is possible to design a modified structure wherein the capacitor electrodes 168 are formed on the top surface of the upper sheet 160 instead of the grounding conductor 160a and the first dielectric material sheet 167 is eliminated so that the capacitor grounding electrode 169a also operates as a grounding conductor for the circulator element. However, this modified structure is undesirable because the dielectric layer is contained in the circulator element layer causing the permeability to reduce.

According to this embodiment of Fig. 16, since the resonating capacitors are integrally formed with the circulator element, there is no need for additionally attaching discrete resonating capacitors. As a result, manufacturing processes will be so much simplified and also the circulator can be downsized.

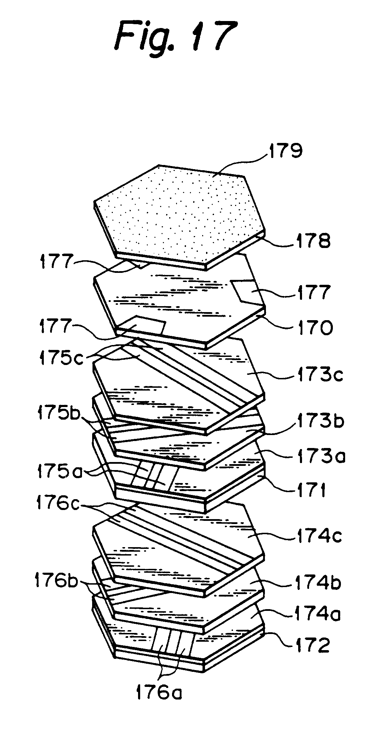

Fig. 17 schematically shows a circulator element of a three-port circulator as a further embodiment according to the present invention. In this embodiment, resonating capacitors are formed integrally in a circulator element by functioning the ferromagnetic material of the circulator element as a dielectric material for the capacitors.

The circulator element portion in this embodiment is constituted by three of two turned coil conductors substantially surrounded by an insulating ferromagnetic material body. Namely, as shown in Fig. 17, the circulator element portion has a top ferromagnetic material sheet 178, an upper ferromagnetic material sheet 170, an intermediate ferromagnetic material sheet 171, a lower ferromagnetic material sheet 172, and ferromagnetic material substrate sheets 173a, 173b, 173c, 174a, 174b and 174c with inner conductors. These ferromagnetic material sheets made of the same insulating ferromagnetic material are stacked and sintered into a single continuous layer.

On top surfaces of the substrate sheets 173a, 173b, 173c, 174a, 174b and 174c, upper inner conductors (parts of coil conductors) 175a, 175b and 175c, and lower inner conductors 176a, 176b and 176c are formed, respectively. Each of the inner conductors has straight strips extending to a predetermined direction (a direction nearly perpendicular to at least one side of the hexagon), the number of the strips corresponding to the number of turns of the coil. Each strip of the upper inner conductors 175a and of the lower inner conductors 176a will be electrically connected in sequence by coil jumper conductors (not shown) for connecting their ends which will appear from the side surfaces of the circulator element after sintering, so as to form the aforementioned two turned coil conductor. Another two turned coil conductors will be formed by the upper inner conductors 175b and the lower inner conductors 176b, the upper inner conductors 175c and the lower inner conductors 176c, and not shown coil jumper conductors. On a top surface of the top sheet 178 and on a bottom surface of the lower sheet 172, grounding conductors for the circulator element will be formed, respectively.

No via hole is formed in the sheets. A ferromagnetic material and conductor material of this embodiment and also another manufacturing method of the circulator element portion in this embodiment are the same as those of the embodiment of Fig. 4. The circulator element portion may be formed in another structure as shown in Fig. 4, Fig. 13, Fig. 14 or Fig. 15a.

The resonating capacitor portion in this embodiment is constituted by capacitor electrodes 177 formed on a top surface of the upper sheet 170, the top sheet 178 laminated thereon, and the capacitor grounding electrode 179 (also serving as the grounding conductors for the circulator element) formed on the top surface of the top sheet 178. The capacitor electrodes 177 are connected to one ends of the coil conductors by capacitor jumper conductors (not shown) formed on the side surfaces of the circulator element, respectively. The top sheet of the ferromagnetic material functions as a part of layer of the circulator element and also serves as a dielectric layer between the capacitor electrode 177 and the capacitor grounding electrode 179. The capacitor electrodes 177 will be formed at positions so that the operation of the circulator will not be subjected to the influence of the electrodes. The circulator according to this embodiment will be used for an application permitting a small capacitance value of the capacitors.

According to this embodiment of Fig. 17, since the resonating capacitors are integrally formed in the circulator element, there is no need for additionally attaching discrete resonating capacitors. As a result, manufacturing processes will be so much simplified and also the circulator can be downsized.

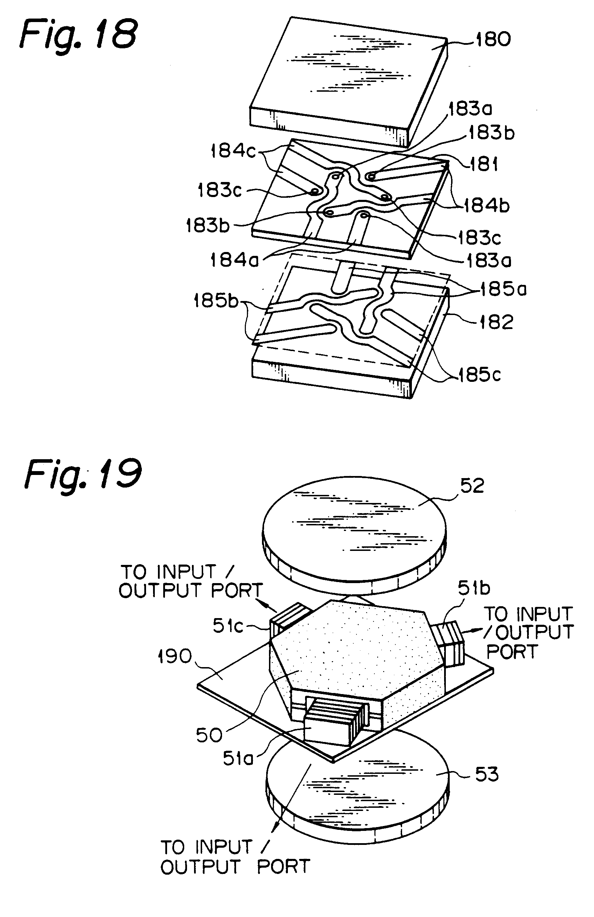

Fig. 18 schematically shows a circulator element of a three-port circulator as a still further embodiment according to the present invention. In this embodiment, a circulator element has a rectangular plane shape. As shown in the figure, an upper ferromagnetic material sheet 180, an intermediate sheet 181 and a lower ferromagnetic material sheet 182, with the rectangular plane shape, are prepared. These ferromagnetic material sheets are made of the same insulating ferromagnetic material. On top and bottom surfaces of the intermediate ferromagnetic material sheet 181, upper inner conductors (coil conductors) 184a, 184b and 184c and lower inner conductors 185a, 185b and 185c are formed, respectively. On each surface, the inner conductors are shaped in three pairs of strips extending to radiating directions. Via holes 183a, 183b and 183c passing through the intermediate sheet 181 are formed at predetermined positions of this sheet 181.

As well as the embodiment of Fig. 4, the upper ferromagnetic material sheet 180, the intermediate sheet 181 and the lower ferromagnetic material sheet 182 are stacked in this order and then sintered into a single continuous layer. By this firing processes, one ends of the upper inner conductors 184a, 184b and 184c are electrically connected to one ends of the lower inner conductors 185a, 185b and 185c through the via hole conductors in the via holes 183a, 183b and 183c, respectively, to form driving lines. A ferromagnetic material and conductor material of this embodiment and also another manufacturing method in this embodiment except for the plane shape are the same as those of the embodiment of Fig. 4.

According to this embodiment of Fig. 18, since the driving lines do not have a trigonal symmetry, propagation characteristics between its ports will differ from each other. So it may be difficult to operate this constitution as a circulator well. However, this constitution can operate as an excellent isolator because of its diagonally symmetric shape with respect to a center line. If it is used as an isolator, one end of the inner conductors 184a and 185a will be connected to a termination, and one ends of the inner conductors 184b and 185b and of the inner conductors 184c and 185c will be utilized as input/output terminals. The other ends of the inner conductors 184a and 185a, of the inner conductors 184b and 185b, and of the inner conductors 184c and 185c are of course connected to the grounding conductor.

Fig. 19 schematically shows a circulator element of a three-port circulator as an another embodiment according to the present invention. In this embodiment, when the resonating capacitors 51a, 51b and 51c are soldered to the circulator element 50, these capacitors and circulator element are first mounted on a substrate 190 and then a reflow soldering is carried out. Except for using the substrate 190, structures, functions and advantages of this embodiment are the same as these of the embodiment of Fig. 4.

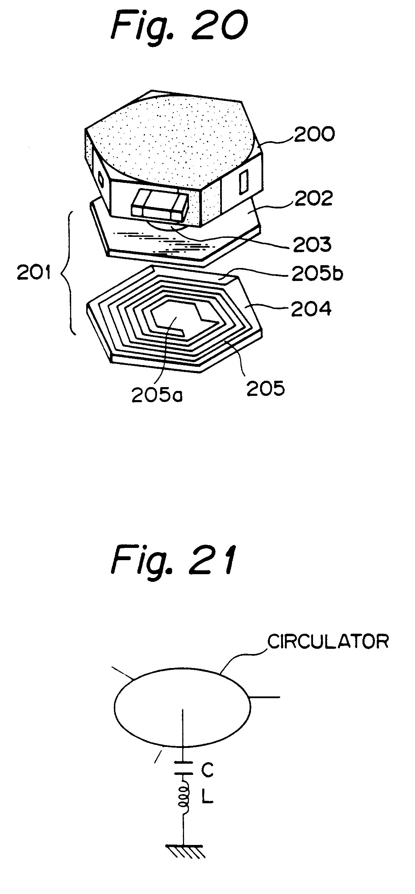

Fig. 20 schematically shows a circulator element of a three-port circulator as an another embodiment according to the present invention, and Fig. 21 is an equivalent circuit diagram of the circulator shown in Fig. 20. In this embodiment, the circulator is floated from the ground by inserting a lumped element LC series resonance circuit or a half wave-length resonator so that the operating frequency range of the circulator becomes broader. Broadbanding of a circulator by arranging a plurality of series resonance circuits in symmetry with respect to the center axis of the circulator between its outer conductor and the ground is known by Japanese patent publication No.52(1977)-32713.

In Fig. 20, a reference numeral 200 denotes a circulator element formed as similar to any of the aforementioned embodiment. Under the circulator element 200, a triplate line resonator 201 with the same plane shape as that of the circulator element 200 is stacked. The triplate line resonator 201 consists of a dielectric material sheet 202 with a high permeability of about "90" which can be co-fired with its inner conductor, a circular shaped capacitor electrode 203 co-axially formed on a top surface of this dielectric sheet 202, a dielectric substrate 204 stacked under the dielectric sheet 202, a spiral line conductor 205 formed on a top surface the dielectric substrate 204 and provided with a capacitor electrode 205a at its one end and at a center position of the dielectric substrate 204, and a grounding conductor (not shown) on a bottom surface of the substrate 204. A capacitor will be formed between the capacitor electrode 203 and the center electrode 205a of the spiral line conductor 205, and an inductor will be formed by the spiral line portion of the spiral line conductor 205. The other end 205b of the spiral line conductor 205 is connected to the grounding conductor under the substrate 204 through a connection line formed on a side surface of the triplate line resonator 201.

The triplate line resonator 201 is made by stacking the dielectric sheet 202 having the capacitor electrode 203 with the dielectric substrate 204 having the spiral line conductor 205, and by co-firing the dielectric material and the inner conductor. The individually formed triplate line resonator 201 is coupled with the circulator element 200 by connecting the capacitor electrode 203 of the resonator 201 to the grounding conductor formed on the bottom surface of the circulator element 200 at an electrical center position of the grounding conductor using a reflow soldering method.

The aforementioned triplate line resonator is made by an LC series resonance circuit. To make the triplate line resonator by a half wave-length resonator, the length of the spiral line conductor is adjusted to a half wave-length and also a via hole and a via hole conductor therein are formed at a center of the dielectric sheet (202) instead of the capacitor electrode (203). One end of the spiral line conductor, which is positioned at the center of the dielectric substrate (204) is connected to the via hole conductor, and the other end of the spiral line conductor is connected to the grounding conductor under the substrate (204) through a connection line formed on a side surface of the triplate line resonator.

The triplate line resonator is made by stacking the dielectric sheet (202) having the via hole and via hole conductor with the dielectric substrate (204) having the spiral line conductor, and by co-firing the dielectric material and the inner conductor. The individually formed triplate line resonator is coupled with the circulator element by connecting the via hole conductor of the resonator to the grounding conductor formed on the bottom surface of the circulator element at an electrical center position of the grounding conductor using a reflow soldering method.

According to this embodiment, since a triplate line resonator is coupled with a co-fired circulator by stacking with each other, the resonator can be easily and precisely arranged in symmetry with respect to the center axis of the circulator. As a result, a downsized and broaderband circulator can be easily produced.

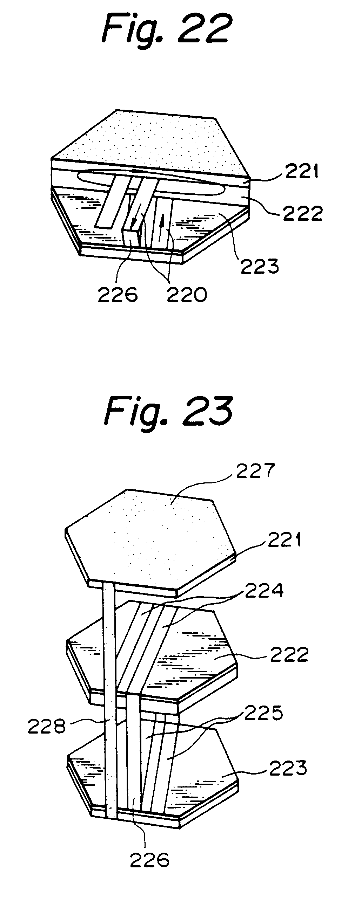

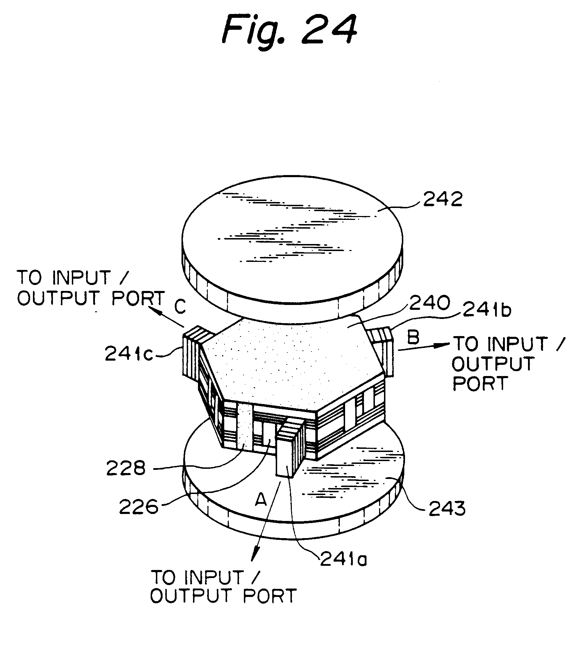

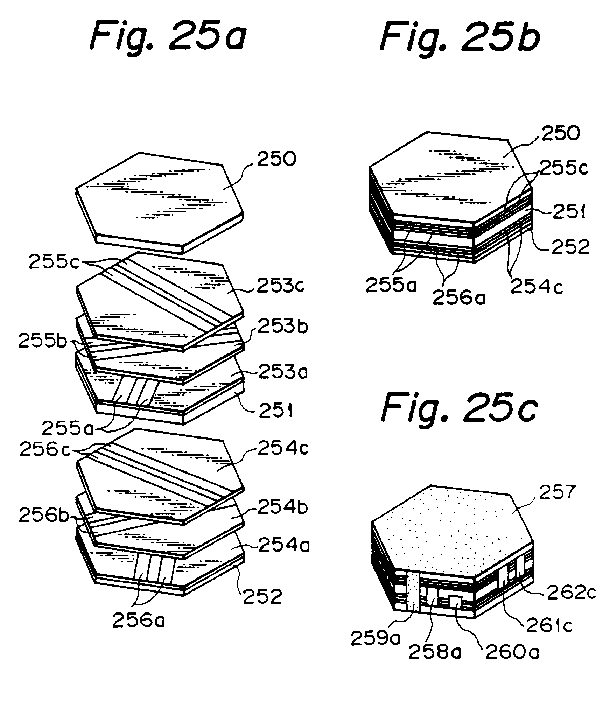

Fig. 22 schematically shows a circulator element of a three-port circulator as a further embodiment according to the present invention, Fig. 23 shows an exploded view of this circulator element, Fig. 24 shows the circulator using this circulator element, and Figs. 25a, 25b and 25c illustrate a part of manufacturing processes of the circulator element.

As shown in these figures, the circulator of this embodiment is a three-port circulator and its circulator element is formed with a plane shape of a regular hexagon. However, the plane shape of this element may be formed in any hexagonal shape or another polygonal shape so far as a symmetrical rotating magnetic field can be produced. Thanks for the polygonal plane shape of the circulator element, spaces for attaching discrete circuit elements such as resonating capacitors or termination resisters will remain on side surfaces of the circulator element. Therefore, if such the discrete circuit elements are additionally attached to the circulator element, a total size of the circulator can be maintained in small.

In Fig. 22, a reference numeral 220 denotes a two-turns coil conductor substantially surrounded by an insulating ferromagnetic material body. The insulating material body is constituted by an upper insulating ferromagnetic material sheet 221, an intermediate insulating ferromagnetic material sheet 222, and a lower insulating ferromagnetic material sheet 223, stacked and integrally sintered into a single continuous layer. The coil conductor, as shown also in Fig. 23, consists of inner conductors 224 and 225 with a predetermined pattern formed on top surfaces of the intermediate ferromagnetic material sheet 224 and the lower ferromagnetic material sheet 225, respectively, and of coil jumper conductors 226 for connecting ends of the inner conductors 224 and 225 which will appear from the side surfaces of the circulator element after sintering, so as to form the aforementioned two turned coil conductor. Each of the inner conductors 224 and 225 has straight strips extending to a predetermined direction (a direction nearly perpendicular to at least one side of the hexagon), the number of the strips corresponding to the number of turns of the coil.

One end of the coil conductor 220 is electrically connected to a terminal electrode formed on a side surface of the circulator element. Grounding conductors (grounding electrodes) 227 are formed on a top surface and a bottom surface of the circulator element, respectively. These grounding conductors 227 and the other end of the coil conductor 224 are electrically connected to by a grounding jumper conductor 228 formed on the side surface of the circulator element. In Figs. 22 and 23, only the coil conductor 220 for a port A is shown. However, in practical, the similar coil conductors are also formed for ports B and C.

As shown in Fig. 24, the circulator has resonating capacitors 241a, 241b and 241c electrically connected to the three terminal electrodes formed on the side surfaces of the circulator element 240, respectively. These capacitors 241a, 241b and 241c are the same as that of the resonating capacitors in the embodiment of Fig. 4.

On and under the circulator element 240, exciting permanent magnets 242 and 243 for applying a dc magnetic field to this circulator element 240 are attached, respectively. Assembling of a housing not shown in Fig. 24 and the permanent magnets 242 and 243 with the circulator element 240 are the same as these of the embodiment of Fig. 4.

Hereinafter, manufacturing processes of the circulator according to this embodiment will be described.

As shown in Fig. 25a, an upper ferromagnetic material sheet 250 having a thickness of about 0.5 mm, an intermediate ferromagnetic material sheet 251 having a thickness of about lmm, a lower ferromagnetic material sheet 252 having a thickness of about 0.5 mm, and ferromagnetic material substrate sheets 253a, 253b, 253c, 254a, 254b and 254c with inner conductors, having a thickness of about 160 µm are prepared. The upper and lower ferromagnetic material sheets 250 and 252 are formed by laminating a plurality of sheets with a thickness in general of 100 to 200 µm (preferably 160 µ). These ferromagnetic material sheets are made of the same insulating ferromagnetic material. This ferromagnetic material may be yttrium iron garnet (hereinafter called as YIG) and the ferromagnetic material sheets will be made of YIG, a binder and a solvent with the following ratio of components.

| | |
|---|---|
| YIG powder | 61.8 weight % |
| binder | 5.9 weight % |
| solvent | 32.3 weight % |

On top surfaces of the substrate sheets 253a, 253b, 253c, 254a, 254b and 254c, upper inner conductors (coil conductors) 255a, 255b and 255c, and lower inner conductors 256a, 256b and 256c are formed, respectively. These inner conductors have straight strips extending to symmetrical predetermined directions (directions nearly perpendicular to at least one side of the hexagon), the number of the strips corresponding to the number of turns of the coil. These inner conductors may be formed by printing or transferring of silver paste, palladium paste or silver-palladium paste. Thus formed upper sheet 250, substrate sheet 253c, substrate sheet 253b, substrate sheet 253a, intermediate sheet 251, substrate sheet 254c, substrate sheet 254b, substrate sheet 254a, and lower sheet 252 are stacked in this order and then the stacked sheets are hot-pressed. As a result, a trigonally symmetric coil pattern will be formed on the front and rear sides of the intermediate sheet 251 so that propagation characteristics between the ports of the three-port circulator will be identical with each other.

Thereafter, the stacked sheets are fired at a temperature such as 1450°C for example, which is equal to or higher than the melting point of the inner conductor material (about 960°C when the inner conductor material is silver). This firing process may be carried out one time or more than one time. If a plurality of firing processes are carried out, at least one of the firing must be executed at a temperature equal to or higher than the melting point of the inner conductor material. According to this firing, the ferromagnetic material layers constituting the above-mentioned sheet are integrally formed into a single continuous layer.

Since the sintering completion temperature of the ferromagnetic material YIG is equal to or above the melting point of the inner conductor material (silver or silver-palladium for example), during the firing process, the inner conductor material will be first melted in an airtight state and then the YIG will be sintered. Thus, as well as in the embodiment of Fig. 4, a propagation line loss can be reduced.

In Fig. 25a, each of the upper ferromagnetic material sheet 250, intermediate ferromagnetic material sheet 251, lower ferromagnetic material sheet 252, and ferromagnetic material substrate sheets 253a, 253b, 253c, 254a, 254b and 254c is illustrated in a regular hexagonal sheet already separated from that for another circulator element. In fact, it is preferred for mass-production that the stacked and heat-pressed ferromagnetic material sheets each of which has printed inner conductors for a plurality of the circulator elements is diced into every circulator element before or after the sintering (firing). If it is diced before sintering, many of the diced circulator elements having a hexagonal shape as shown in Fig. 25a are sintered. Whether the dicing should be carried out before or after the sintering will be determined in accordance with the metal used for the inner conductors and with the dicing method. For example, if silver is used for the inner conductors, the dicing will be carried out after the sintering so as to prevent a loss of the molten silver. If palladium is used for the inner conductors, dicing can be executed before the sintering.

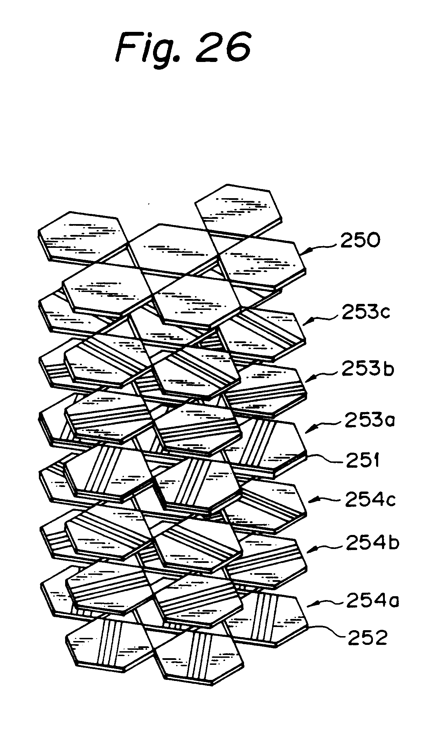

Fig. 26 shows an arrangement example of the circulator elements on ferromagnetic material sheets. As shown this figure, an upper ferromagnetic material sheet 250, ferromagnetic material substrate sheets 253c, 253b and 253a, an intermediate ferromagnetic material sheet 251, ferromagnetic material substrate sheets 254c, 254b and 254a, and a lower ferromagnetic material sheet 252 are prepared and many inner conductors are printed on top surfaces of the substrate sheets, respectively. These sheets are then stacked and sintered and thereafter are diced into each circulator element. The arrangement of the circulator elements on the sheets shown in Fig. 26 has advantages that dicing is easy because of straight line dicing and thus the dicing can be carried out after sintering, but has a disadvantage that waste area of the sheets is not a little. An another arrangement of the circulator elements on a ferromagnetic material sheet as shown in Fig. 9 and an another dicing process of the circulator elements as shown in Figs. 10a and 10b may be utilized.

After the dicing and sintering processes, each the circulator element is barrel polished so that necessary inner conductors are appeared on the side surface of the circulator element as shown in Fig 25b. Then, corners of the sintered circulator element are chamfered. Thereafter, as shown in Fig. 25c, coil jumper conductors, grounding jumper conductors and terminal electrodes are formed by baking on side surfaces of the circulator element, and grounding conductors are formed on a top surface and a bottom surface of the circulator element by baking. For example, on the front side surface (the side surface of the port A shown in Fig. 24) of the circulator element, a coil jumper conductor 258a for electrically connecting inner conductors 255a and 256a appeared on this side surface with each other, a grounding jumper conductor 259a for electrically connecting an inner conductor 255a (one end of the coil conductor) appeared on this side surface to grounding conductors 257 formed on the top and bottom surfaces of the circulator element, and a terminal electrode 260a for electrically connected to an inner conductor (the other end of the coil conductor) 256a appeared on this side surface are formed. On a side surface positioned at the right of this side surface (a side surface opposed to the port C shown in Fig. 24), coil jumper conductors 261c and 262c for electrically connecting inner conductors 254c and 255c appeared on this side surface with each other are formed, respectively. Thus, three of coil conductors each of which starts from the terminal electrode, winds by two turns in the ferromagnetic material, and terminates at the grounding conductor are formed.

The circulator element thus manufactured has a plane shape in a regular hexagon inscribed in a circle with 4 mm diameter and has a thickness of 1 mm. The resonating capacitors 241a, 241b and 241c are mounted and soldered by a reflow soldering to the terminal electrodes (260a) of the circulator element, respectively, as shown in Fig. 24. A circulator is then finished by assembling exciting permanent magnets for applying a dc magnetic field and a metal housing operating also as a magnetic yoke, with the circulator element. The structure of the housing and assembling of the circulator element and exciting permanent magnets with the housing are the same as described with reference to Figs. 11a to 11c.

Operating frequency range and loss of the circulator is mainly determined by the performance of its circulator element. Larger difference between the permeability µ₊ and µ₋ and also lower coil resistance and lower magnetic tangent will result broader operating frequency range and lower loss of the circulator element. Furthermore, if the permeability µ₊ and µ₋ is large and also the number of turns of the coil is great (long length of the coil conductor), a necessary inductance will be obtained with a compact size. The circulator according to this embodiment using the inner conductor melting method can obtain following advantages.
(1) Since the ferromagnetic material layers are sintered into a single continuous layer, the RF magnetic flux will close in the circulator element. Therefore, no demagnetizing field will be produced and thus the difference between the permeability µ₊ and µ₋ will become large. As a result, higher inductance can be obtained causing the circulator to downsize.
(2) Since the ferromagnetic material layers are sintered into a single continuous layer, the RF magnetic flux will close in the circulator element. Therefore, no demagnetizing field will occur and thus the difference between the permeability µ₊ and µ₋ will become larger resulting broader operating frequency range.
(3) The coil conductors are formed by the inner conductor melting method. Therefore, its resistance will be low resulting lower loss.
(4) Since the structure of the circulator element is proper for mass production, a sharp reduction in the manufacturing cost can be expected.
(5) Since each of the driving lines are formed in three layers and thus no via hole is formed, not only manufacturing process can be simplified to reduce the manufacturing cost but also an insertion loss can be effectively suppressed from increasing.
(6) Since the magnetic yoke constituted by the metal housing is united without separation and has a continuous magnetic path and also the magnetic yoke is closely contacted to the exciting permanent magnets, the exciting magnetic path is continuous without break. Thus, the magnetic resistance in the magnetic path will become extremely lower resulting excellent characteristics of the circulator.

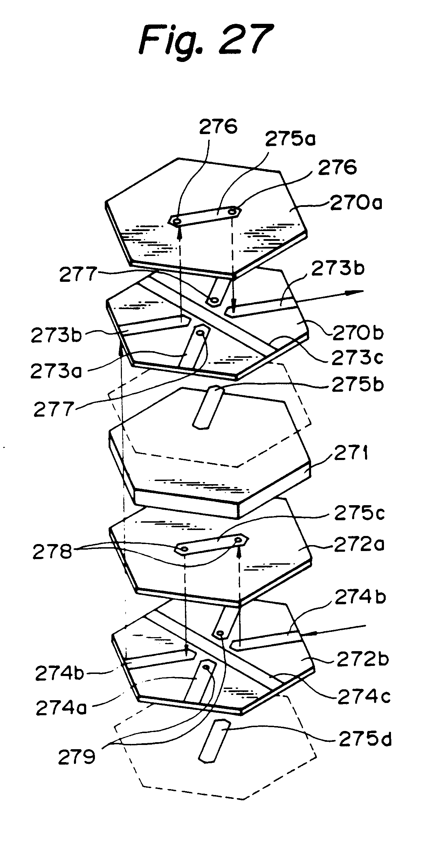

Fig. 27 schematically shows a circulator element of a three-port circulator as an another embodiment according to the present invention. In this embodiment, each of coil conductors is wound by one turn by means of an upper unit and a lower unit and each of inner conductors has a straight strip pattern, so as to form a hairpin-patterned coil conductor. Another constitution, manufacturing processes, and ferromagnetic material and conductive material in this embodiment are the same as these in the embodiment of Fig. 22.

As shown in Fig. 27, a circulator element in this embodiment has ferromagnetic material substrate sheets 270a and 270b, an intermediate ferromagnetic material sheet 271, and ferromagnetic material substrate sheets 272a and 272b. These ferromagnetic material sheets made of the same insulating ferromagnetic material are stacked in this order and sintered into a single continuous layer. In fact, upper and lower sheets made of the same insulating ferromagnetic material as the above sheets are respectively stacked on a top surface of the substrate sheet 270a and a bottom surface of the substrate sheet 272b, and integrally sintered into the single continuous layer.

On top surfaces of the substrate sheet 270b in the upper unit and of the substrate sheet 272b in the lower unit, inner conductors (parts of coil conductors) 273a, 273b and 273c, and inner conductors (parts of coil conductors) 274a, 274b and 274c are formed, respectively. Each of the inner conductors has a straight strip extending to one of three symmetrical radiating directions (directions perpendicular to at least one side of the hexagon). Furthermore, on bottom surfaces of these substrate sheets 270b and 272b and also on top surfaces of the substrate sheets 270a and 272a, inner conductors 275b, 275d, 275a and 275c having cross over patterns are formed, respectively. Via holes 276, 277, 278 and 279 passing through the respective substrate sheets 270a, 270b, 272a and 272b are formed at predetermined positions of these respective sheets. At each via hole position, a via hole conductor having a diameter larger than that of the via hole is formed. To form coil conductors, each of the strips of the inner conductors 273a, 273b, 274a and 274b are connected to the cross over inner conductors 275b, 275d, 275a and 275c by these via hole conductors, respectively, and also the upper and lower units are connected with each other by coil jumper conductors (not shown) formed on side surfaces of the circulator element. Namely, one ends of the inner conductors 273a, 273b and 273c and one ends of the inner conductors 274a, 274b and 274c are connected with each other by the coil jumper conductors.

A path of the one coil conductor is, as shown in Fig. 27, follows. A terminal electrode → one end of the inner conductor 274b → the via hole 278 → the cross over inner conductor 275c → the via hole 278 → the other end of the inner conductor 274b → the coil jumper conductor → one end of the inner conductor 273b → the via hole 276 → the cross over inner conductor 275a → the via hole 276 → the other end of the inner conductor 273b → the grounding conductor. On a top surface of the unshown upper sheet and on a bottom surface of the unshown lower sheet, grounding conductors are formed, respectively.

According to this embodiment of Fig. 27, since the inner conductors have three straight strip patterns each of which extends to a different direction and most of the driving lines are made on the same plane, excellent high frequency symmetry of the three ports can be expected. Also, thanks for small number of the via holes, not only manufacturing of the circulator becomes easy but also increasing of the insertion loss can be suppressed. It is known from data with respect to a multi-layered inductor that its inductance will increase if one end of its coil is positioned just after the other end of the coil so that the coil is completely closed. Therefore, in this embodiment where each of the coil conductors is wound by one turn in completely closed state, a high inductance can be obtained with a compact size. Another advantages in this embodiment are the same as that in the embodiment of Fig. 22.

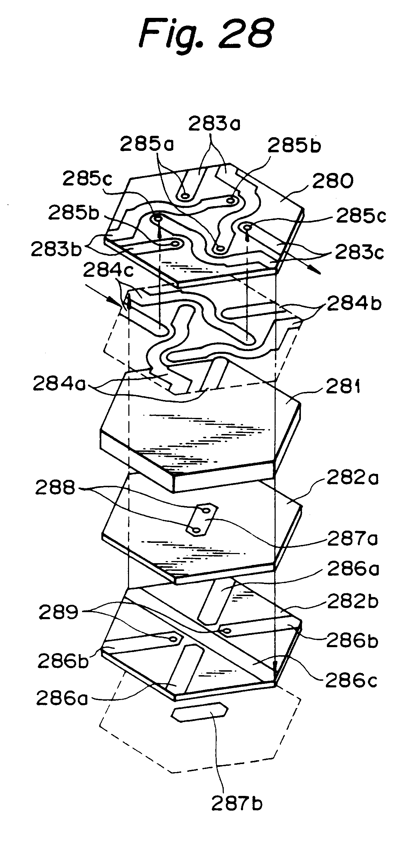

Fig. 28 schematically shows a circulator element of a three-port circulator as an still another embodiment according to the present invention. In this embodiment, each of coil conductors is wound by one and half turns, an upper unit has inner conductors shaped in three pairs of strip patterns, each of which pair extends to the same radiating direction by stepping aside from the via holes of another strip pattern, and a lower unit has inner conductors shaped in a straight strip pattern. Another constitution, manufacturing processes, and ferromagnetic material and conductive material in this embodiment are the same as these in the embodiment of Fig. 22.

As shown in Fig. 28, a circulator element in this embodiment has a ferromagnetic material substrate sheet 280, an intermediate ferromagnetic material sheet 281, and ferromagnetic material substrate sheets 282a and 282b. These ferromagnetic material sheets made of the same insulating ferromagnetic material are stacked in this order and sintered into a single continuous layer. In fact, upper and lower sheets made of the same insulating ferromagnetic material as the above sheets are respectively stacked on a top surface of the substrate sheet 280 and a bottom surface of the substrate sheet 282b, and integrally sintered into the single continuous layer.

On top and bottom surfaces of the substrate sheet 280 in the upper unit, upper inner conductors (parts of coil conductors) 283a, 283b and 283c and lower inner conductors 284a, 284b and 284c are formed, respectively. On each surface, the inner conductors are patterned in three pairs of strips extending symmetrical radiating directions (directions parallel to at least one side of the hexagon). Via holes 285a, 285b and 285c passing through the substrate sheet 280 are formed at predetermined positions of this sheet 280. At each via hole position, a via hole conductor having a diameter larger than that of the via hole is formed. One ends of the upper inner conductors 283a, 283b and 283c are electrically connected to one ends of the lower inner conductors 284a, 284b and 284c through the via hole conductors in the via holes 285a, 285b and 285c, respectively.

On a top surface of the substrate sheet 282b in the lower unit, inner conductors (parts of coil conductors) 286a, 286b and 286c are formed. Each of the inner conductors has a straight strip extending to one of three symmetrical radiating directions (directions parallel to at least one side of the hexagon). Furthermore, on a bottom surface of the substrate sheet 282b and also on a top surface of the substrate sheet 282a, inner conductors 287a and 287b having cross over patterns are formed, respectively. Via holes 288 and 289 passing through the respective substrate sheets 282a and 282b are formed at predetermined positions of these respective sheets. At each via hole position, a via hole conductor having a diameter larger than that of the via hole is formed. By means of these via hole conductors, each of the strips of the inner conductors 286a and 286b are connected to the cross over inner conductors 287a and 287b, respectively.

The upper and lower units are connected with each other by coil jumper conductors (not shown) formed on side surfaces of the circulator element so as to form coil conductors. Namely, one ends of the inner conductors 283a, 283b and 283c and one ends of the inner conductors 286a, 286b and 286c are connected with each other by the coil jumper conductors, and also the other ends of the inner conductors 286a, 286b and 286c and one ends of the inner conductors 284a, 284b and 284c are connected with each other by the coil jumper conductors, respectively.

A path of the one coil conductor is, as shown in Fig. 28, follows. A terminal electrode → one strip of the inner conductor 284c → the via hole 285c → one strip of the inner conductor 283c → the coil jumper conductor → one end of the inner conductor 286c → the other end of the inner conductor 286c → the coil jumper conductor → the other strip of the inner conductor 284c → the via hole 285c → the other strip of the inner conductor 283c → the grounding conductor. On a top surface of the unshown upper sheet and on a bottom surface of the unshown lower sheet, grounding conductors are formed, respectively.

According to this embodiment of Fig. 28, since each of the coil conductors is wound by one and half turns in completely closed state, a high inductance can be obtained with a compact size. Another advantages in this embodiment are the same as that in the embodiment of Fig. 22.

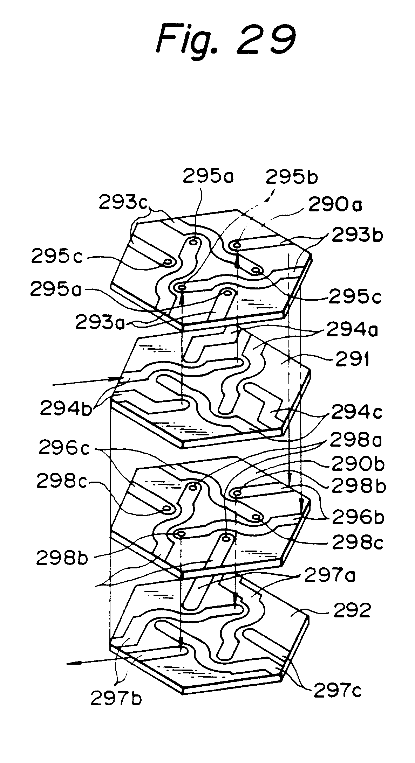

Fig. 29 schematically shows a circulator element of a three-port circulator as a further embodiment according to the present invention. In this embodiment, each of coil conductors is wound by two turns, and each of upper and lower units has inner conductors shaped in three pairs of strip patterns, each of which pair extends to the same radiating direction by stepping aside from the via holes of another strip pattern. Another constitution, manufacturing processes, and ferromagnetic material and conductive material in this embodiment are the same as these in the embodiment of Fig. 22.

As shown in Fig. 29, a circulator element in this embodiment has a ferromagnetic material substrate sheet 290a, an intermediate ferromagnetic material sheet 291, a ferromagnetic material substrate sheet 290b, and a lower ferromagnetic material sheet 292. These ferromagnetic material sheets made of the same insulating ferromagnetic material are stacked in this order and sintered into a single continuous layer. In fact, an upper sheet made of the same insulating ferromagnetic material as the above sheets is stacked on a top surface of the substrate sheet 290a, and integrally sintered into the single continuous layer.

On top surfaces of the substrate sheet 290a and the intermediate sheet 291 in the upper unit, upper inner conductors (parts of coil conductors) 293a, 293b and 293c and lower inner conductors 294a, 294b and 294c are formed, respectively. On each surface, the inner conductors are patterned in three pairs of strips extending to symmetrical radiating directions (directions parallel to at least one side of the hexagon). Via holes 295a, 295b and 295c passing through the substrate sheet 290a are formed at predetermined positions of this sheet 290a. At each via hole position, a via hole conductor having a diameter larger than that of the via hole is formed. One ends of the upper inner conductors 293a, 293b and 293c are electrically connected to one ends of the lower inner conductors 294a, 294b and 294c through the via hole conductors in the via holes 295a, 295b and 295c, respectively.

Also on top surfaces of the substrate sheet 290b and the lower sheet 292 in the lower unit, upper inner conductors (parts of coil conductors) 296a, 296b and 296c and lower inner conductors 297a, 297b and 297c are formed, respectively. On each surface, the inner conductors are shaped in three pairs of strip patterns, each of which pair extends to the same radiating direction (a direction parallel to at least one side of the hexagon). Via holes 298a, 298b and 298c passing through the substrate sheet 290b are formed at predetermined positions of this sheet 290b. At each via hole position, a via hole conductor having a diameter larger than that of the via hole is formed. One ends of the upper inner conductors 296a, 296b and 296c are electrically connected to one ends of the lower inner conductors 297a, 297b and 297c through the via hole conductors in the via holes 298a, 298b and 298c, respectively.

The upper and lower units are connected with each other by coil jumper conductors (not shown) formed on side surfaces of the circulator element so as to form coil conductors. Namely, one ends the inner conductors 293a, 293b and 293c and one ends of the inner conductors 296a, 296b and 296c are connected with each other by the coil jumper conductors, and one ends of one strips of the inner conductors 297a, 297b and 297c and one ends of one strips of the inner conductors 294a, 294b and 294c are connected with each other by the coil jumper conductors, respectively.

A path of the one coil conductor is, as shown in Fig. 29, follows. A terminal electrode → one strip of the inner conductor 294b → the via hole 295b → one strip of the inner conductor 293b → the coil jumper conductor → one strip of the inner conductor 296b → the via hole 298b → one strip of the inner conductor 297b → the coil jumper conductor → the other strip of the inner conductor 294b → the via hole 295b → the other strip of the inner conductor 293b → the coil jumper conductor → the other strip of the inner conductor 296b → the via hole 298b → the other strip of the inner conductor 297b → the grounding conductor. On a top surface of the unshown upper sheet and on a bottom surface of the lower sheet 292, grounding conductors are formed, respectively.

According to this embodiment of Fig. 29, since each of the coil conductors is wound by two turns in completely closed state, a high inductance can be obtained with a compact size. Another advantages in this embodiment are the same as that in the embodiment of Fig. 22.

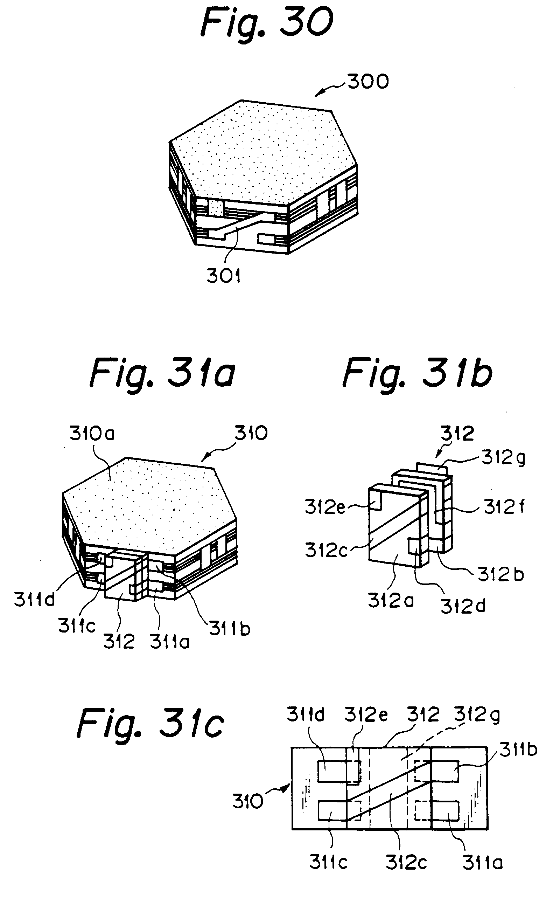

Fig. 30 schematically shows a circulator element of a three-port circulator as an another embodiment according to the present invention. In this embodiment, each of coil jumper conductors 301 formed on respective side surfaces of the circulator element 300 by printing has a slant strip pattern. Except for using such the slant coil jumper conductors 301, structures, functions and advantages of this embodiment are the same as these of the embodiment of Fig. 22.

Figs. 31a to 31b illustrate a circulator element and a structure of resonating capacitor to be attached to the circulator element as a still another embodiment of the circulator according to the present invention. In this embodiment, on side surfaces of the circulator element 310, only connection terminals 311a, 311b, 311c and 311d are formed by printing, and terminal electrodes for inputting and outputting signals and jumper conductors are formed in discrete connection terminal substrates 312 with resonating capacitors, which substrates are to be additionally attached to the side surfaces of the circulator element.

As shown in Fig. 31b, the connection terminal substrate 312 is constituted by a multi-layer dielectric substrate having a first dielectric layer 312a and a second dielectric layer 312b. On front and side surfaces of the first dielectric layer 312a, a coil jumper conductor 312c having an oblique strip pattern, an input/output terminal electrode 312d and a grounding conductor 312e are formed by printing. On a front surface of the second dielectric layer 312b, a capacitor electrode 312f is formed by printing and a capacitor grounding electrode 312g is formed by printing on its rear surface. A resonating capacitor will be formed between the capacitor electrode 312f and the capacitor grounding electrode 312g.

In a state that this connection substrate 312 is attached to the side surface of the circulator element 310, as will be apparent from Fig. 31c, the coil jumper conductor 312c connects the terminals 311b and 311c of the circulator element 310 with each other. The input/output terminal electrode conducted with the capacitor electrode 312f is connected to the terminal 311a of the circulator element 310. The grounding conductor 312e is connected to the terminal 311d and also to a grounding conductor 310a formed on a top surface of the circulator element 310. The capacitor grounding electrode 312g is also connected to the grounding conductor 310a.

The structure in the circulator element 310 of this embodiment is the same as that in embodiment of Fig. 22. According to this embodiment of Figs. 31a to 31c, since the discrete connection terminal substrate 312 which includes a resonating capacitor and is to be additionally attached to the side surface of the circulator element has a terminal electrode for inputting and outputting signal and a jumper conductor, all the wiring process can be completed only by carrying out the same process as the attaching process of a resonating capacitor to the circulator element, without printing jumper conductors and grounding conductors on the side surfaces of the circulator element. Thus, the manufacturing process will become easier causing the manufacturing cost to reduce.

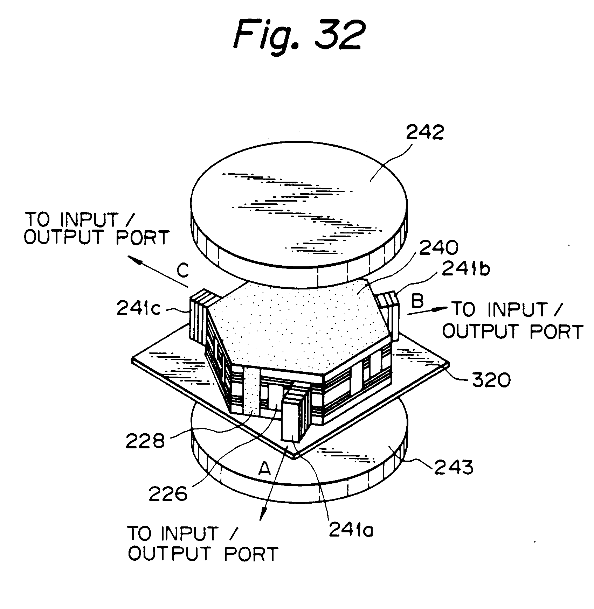

Fig. 32 schematically shows a circulator element of a three-port circulator as a still another embodiment according to the present invention. In this embodiment, when the resonating capacitors 241a, 241b and 241c are soldered to the circulator element 240, these capacitors and circulator element are first mounted on a substrate 320 and then a reflow soldering is carried out. Except for using the substrate 320, structures, functions and advantages of this embodiment are the same as these of the embodiment of Fig. 22.

As described with reference to Fig. 20 and 21, the circulator element in the aforementioned embodiments of Figs. 22, 27, 28, 29, 30, 31a to 31c and 32 can be combined with a lumped element LC series resonance circuit or a half wavelength resonator so that the operating frequency range of the circulator becomes broader.

Although, the inner conductors are formed by printing silver paste, palladium paste or silver-palladium paste in the aforementioned embodiments, these inner conductor can be formed by patterning silver foil. The inner pattern may be made of gold, palladium, silver-palladium or their alloy in condition that its resistance loss is not so great and no solid solution will occur with the used ferromagnetic material.

For the ferromagnetic material, any insulating ferromagnetic material other than YIG may be used in condition that no solid solution will occur with the inner conductor material.

A circulator according to the present invention can be constituted by using an inner conductor material having a melting point higher than a sintering completion temperature of the insulating ferromagnetic material so as to sinter the ferromagnetic material without melting the inner conductor.

The number of turns of the coil conductors may be freely determined other than the two turns. The larger of the number of turns, the greater of its inductance.

The above-mentioned embodiments are described with respect to three-port circulator. However, it will be apparent that the present invention can be applied to a circulator having ports more than three. Also the present invention can be applied to a distributed element circulator having a circulator element integral with a capacitor circuit and having an impedance transformer for broadening the operating frequency band combined in its terminal circuits, other than the lumped element circulator. Furthermore, it is apparent that a non-reciprocal circuit element such as an isolator can be easily formed from any of circulators according to the present invention.

## Claims

1. A multi-layer circulator including a circulator element (50), said circulator element being provided with inner conductors (41) made of a conductive material and an insulating ferromagnetic material body (40) closely surrounding said inner conductors, said insulating ferromagnetic material body being constituted by a fired single continuous body having at least one side surface, each of said inner conductors (41) extending to the at least one side surface and being grounded at its one end,
characterized in that said inner conductor (41) are constituted by three conductors arranged trigonally symmetric shape and insulated with each other, and in that the conductive material of said inner conductors has a melting point and said insulating ferromagnetic material body is made of a ferromagnetic material with a sintering completion temperature which is higher than said melting point.

2. A circulator as claimed in claim 1, wherein said circulator element (50) as a polygonal plane shape.

3. A circulator as claimed in claim 2, wherein said circulator element (50) has a hexagonal plane shape.

4. A circulator as claimed in claim 1, wherein said inner conductors (41) have a pattern with a plurality of strips extending, in a plane, to a plurality of symmetrical radiating directions, respectively.

5. A circulator as claimed in claim 4, wherein said strips include straight strips.

6. A circulator as claimed in claim 1, wherein said inner conductors (41) have a pattern with at least one straight strip extending, in a plane, to a predetermined direction.

7. A circulator as claimed in claim 1, wherein said insulating ferromagnetic material body (40) is formed in a single continuous layer by firing an upper ferromagnetic material layer, at least one intermediate ferromagnetic material layer and a lower ferromagnetic material layer, and wherein said circulator element (50) includes coil conductors having a pattern wound at least one turn around said at least one intermediate ferromagnetic material sheet, said inner conductors (41) constituting a part of said coil conductors.

8. A circulator as claimed in claim 7, wherein said at least one intermediate ferromagnetic material layer and said lower ferromagnetic material layer have top surfaces, and wherein said coil conductors include the inner conductors (41) formed on the top surfaces of said intermediate ferromagnetic material layer and said lower ferromagnetic material layer, and jumper conductors for connecting ends of said inner conductors each other.

9. A circulator as claimed in claim 7, wherein said upper ferromagnetic material layer has a top surface and said lower ferromagnetic material layer has a bottom surface, and wherein said circulator element (50) includes grounding conductors formed on the top surface of said upper ferromagnetic material layer and the bottom surface of said lower ferromagnetic material layer, respectively.

10. A circulator as claimed in claim 1, wherein said circulator further includes three terminal electrodes (76) formed on the at least one side surface and electrically connected to one ends of said inner conductors (41), a plurality of circuit elements (51a, 51b, 51c) electrically connected to the terminal electrodes (76), and excitation permanent magnets (52, 53) applying a dc magnetic field to said circulator element.

11. A circulator as claimed in claim 10, wherein said circuit elements are a plurality of capacitor electrically connected to said respective terminal electrodes, for resonating with an applied frequency.

12. A circulator as claimed in claim 10, wherein said circuit elements are discrete circuit elements additionally attached and electrically connected to said respective terminal electrodes.

13. A circulator as claimed in claim 10, wherein said circuit elements are internal circuit elements integrally formed with said circulator element.

14. A circulator as claimed in claim 10, wherein said circulator further includes a metal housing closely fixed to said exciting permanent magnets (52, 53), said metal housing having a continuous magnetic path.

15. A circulator as claimed in claim 10, wherein said circulator element (50) has a polygonal plane shape.

16. A circulator as claimed in claim 15, wherein said circulator element (50) has a hexagonal plane shape.

17. A circulator as claimed in claim 10, wherein said inner conductors (41) have a pattern with a plurality of strips extending, in a plane, to a plurality of symmetrical radiating directions, respectively.

18. A circulator as claimed in claim 17, wherein said strips include straight strips.

19. A circulator as claimed in claim 10, wherein said inner conductors have a pattern with at least one straight strip extending, in a plane, to a predetermined direction.

20. A circulator as claimed in claim 1, wherein said circulator element (50) is further provided with coil conductors of at least one turn, said inner conductors constituting a part of said coil conductor, and wherein said circulator further includes three terminal electrodes (76) formed on the at least one side surface and electrically connected to one ends of said inner conductors (41), a plurality of circuit elements (51a, 51b, 51c) electrically connected to the terminal electrodes, and excitation permanent magnets (52, 53) for applying a dc magnetic field to said circulator element.

21. A circulator as claimed in claims 20, wherein said circuit elements (51a, 51b, 51c) are a plurality of capacitor electrically connected to said respective terminal electrodes, for resonating with an applied frequency.

22. A circulator as claimed in claim 20, wherein said circuit elements are discrete circuit elements additionally attached and electrically connected to said respective terminal electrodes.

23. A circulator as claimed in claim 20, wherein said circuit elements are internal circuit elements integrally formed with said circulator element.

24. A circulator as claimed in claim 20, wherein said circulator further includes a metal housing closely fixed to said exciting permanent magnets (52, 53), said metal housing having a continuous magnetic path.

25. A circulator as claimed in claim 20, wherein said circulator element (50) has a polygonal plane shape.

26. A circulator as claimed in claim 25, wherein said circulator element (50) has a hexagonal plane shape.

27. A circulator as claimed in claim 20, wherein said inner conductors (41) have a pattern with a plurality of strips extending, in a plane, to a plurality of symmetrical radiating directions, respectively.

28. A circulator as claimed in claim 27, wherein said strips include straight strips.

29. A circulator as claimed in claim 20, wherein said inner conductors (41) have a pattern with at least one straight strip extending, in a plane, to a predetermined direction.

## Patentansprüche

1. Mehrschichtiger Zirkulator mit einem Zirkulatorelement (50), das mit inneren Leitern (41) aus einem leitenden Material und einem die inneren Leiter eng umgebenden Körper (40) aus einem isolierenden ferromagnetischen Material versehen ist, wobei der Körper aus isolierendem ferromagnetischem Material durch einen einzigen kontinuierlichen gebrannten Körper mit wenigstens einer Seitenfläche gebildet ist und alle inneren Leiter (41) sich zu der wenigstens einen Seitenfläche erstrecken und an ihrem einen Ende geerdet sind, **dadurch gekennzeichnet,** daß die inneren Leiter (41) durch drei in einer dreieckigen symmetrischen Form angeordnete und gegeneinander isolierte Leiter gebildet sind und daß das leitende Material der inneren Leiter einen Schmelzpunkt hat und der Körper aus isolierendem ferromagnetischem Material aus einem ferromagnetischen Material mit einer Sinterungsabschlußtemperatur hergestellt ist, die höher als der Schmelzpunkt ist.

2. Zirkulator nach Anspruch 1, bei dem das Zirkulatorelement (50) eine polygonale ebene Form hat.

3. Zirkulator nach Anspruch 2, bei dem das Zirkulatorelement (50) eine hexagonale ebene Form hat.

4. Zirkulator nach Anspruch 1, bei dem die inneren Leiter (41) ein Muster mit einer Vielzahl von Streifen aufweisen, die sich jeweils in einer Ebene in einer Vielzahl symmetrischer Strahlungsrichtungen erstrecken.

5. Zirkulator nach Anspruch 4, bei dem die Streifen gerade Streifen aufweisen.

6. Zirkulator nach Anspruch 1, bei dem die inneren Leiter (41) ein Muster mit wenigstens einem geraden Streifen aufweisen, der sich in einer Ebene in einer vorbestimmten Richtung erstreckt.

7. Zirkulator nach Anspruch 1, bei dem der Körper (40) aus isolierendem ferromagnetischem Material in einer einzigen kontinuierlichen Schicht durch Brennen einer oberen Schicht aus ferromagnetischem Material, wenigstens einer mittleren Schicht aus ferromagnetischem Material und einer unteren Schicht aus ferromagnetischem Material ausgebildet ist und bei dem das Zirkulatorelement (50) Spulenleiter mit einem Muster aufweisen, das in Form wenigstens einer Windung um die wenigstens eine mittlere Schicht aus ferromagnetischem Material herumgewickelt ist, wobei die inneren Leiter (41) einen Teil der Spulenleiter bilden.

8. Zirkulator nach Anspruch 7, bei dem die wenigstens eine mittlere Schicht aus ferromagnetischem Material und die untere Schicht aus ferromagnetischem Material obere Oberflächen aufweisen und bei dem die Spulenleiter die inneren Leiter (41) auf den oberen Oberflächen der mittleren Schicht aus ferromagnetischem Material und Überbrückungsleiter zum Verbinden von Enden der inneren Leiter aufweisen.

9. Zirkulator nach Anspruch 7, bei dem die obere Schicht aus ferromagnetischem Material eine obere Oberfläche und die untere Schicht aus ferromagnetischem Material eine untere Oberfläche hat und bei dem das Zirkulatorelement (50) jeweils auf der oberen Oberfläche der oberen Schicht aus ferromagnetischem Material und der unteren Oberfläche der unteren Schicht aus ferromagnetischem Material ausgebildete Erdungsleiter aufweist.

10. Zirkulator nach Anspruch 1, der ferner drei an der wenigstens einen Seitenfläche ausgebildete und elektrisch mit einem der Enden der inneren Leiter (41) verbundene Anschlußelektroden (76), eine Vielzahl von Schaltungselementen (51a, 51b, 51c), die elektrisch mit den Anschlußelektroden (76) verbunden sind, und Erregungsdauermagneten (52, 53) zum Anlegen eines Gleich-Magnetfelds an dem Zirkulatorelement aufweist.

11. Zirkulator nach Anspruch 10, bei dem die Schaltungselemente eine Vielzahl elektrisch jeweils mit den An- schlußelektroden verbundener Kondensatoren aufweisen, um mit einer zugeführten Frequenz in Resonanz zu schwingen.

12. Zirkulator nach Anspruch 10, bei dem die Schaltungselemente diskrete Schaltungselemente sind, die zusätzlich angebracht und elektrisch mit den jeweiligen Anschlußelekroden verbunden sind.

13. Zirkulator nach Anspruch 10, bei dem die Schaltungselemente interne Schaltungselemente sind, die mit dem Zirkulatorelement integriert ausgebildet sind.

14. Zirkulator nach Anspruch 10, der ferner ein dicht an den Erregungsdauermagneten (52, 53) befestigtes Metallgehäuse aufweist, das einen kontinuierlichen Magnetpfad aufweist.

15. Zirkulator nach Anspruch 10, bei dem das Zirkulatorelement (50) eine hexagonale ebene Form hat.

16. Zirkulator nach Anspruch 15, bei dem das Zirkulatorelement (50) eine hexagonale ebene Form hat.

17. Zirkulator nach Anspruch 10, bei dem die inneren Leiter (41) ein Muster mit einer Vielzahl von Streifen aufweisen, die sich jeweils in einer Ebene in einer Vielzahl symmetrischer Strahlungsrichtungen erstrecken.

18. Zirkulator nach Anspruch 17, bei dem die Streifen gerade Streifen aufweisen.

19. Zirkulator nach Anspruch 10, bei dem die inneren Leiter ein Muster mit wenigstens einem geraden Streifen aufweisen, der sich in einer Ebene in einer vorbestimmten Richtung erstreckt.

20. Zirkulator nach Anspruch 1, bei dem das Zirkulatorelement (50) ferner mit Spulenleitern aus wenigstens einer Windung versehen ist, die inneren Leiter einen Teil der Spulenleiter bilden und wobei der Zirkulator ferner drei auf der wenigstens einen Seitenfläche ausgebildete und elektrisch mit dem einen Ende der inneren Leiter (41) verbundene Anschlußelektroden (76), eine Vielzahl von elektrisch mit den Anschlußelektroden verbundener Schaltungselemente (51a, 51b, 51c) und Erregungsdauermagneten (52, 53) zum Anlegen eines Gleich-Magnetfelds an dem Zirkulatorelement (52, 53) aufweist.

21. Zirkulator nach Anspruch 20, bei dem die Schaltungselemente (51a, 51b, 51c) eine Vielzahl elektrisch jeweils mit den Anschlußelektroden verbundener Kondensatoren aufweisen, um mit einer zugeführten Frequenz in Resonanz zu schwingen.

22. Zirkulator nach Anspruch 20, bei dem die Schaltungselemente diskrete Schaltungselemente sind, die zusätzlich angebracht und elektrisch mit den jeweiligen Anschlußelekroden verbunden sind.

23. Zirkulator nach Anspruch 20, bei dem die Schaltungselemente interne Schaltungselemente sind, die mit dem Zirkulatorelement integriert ausgebildet sind.

24. Zirkulator nach Anspruch 20, der ferner ein dicht an den Erregungsdauermagneten (52, 53) befestigtes Metallgehäuse aufweist, das einen kontinuierlichen Magnetpfad aufweist.

25. Zirkulator nach Anspruch 20, bei dem das Zirkulatorelement (50) eine hexagonale ebene Form hat.

26. Zirkulator nach Anspruch 25, bei dem das Zirkulatorelement (50) eine hexagonale ebene Form hat.

27. Zirkulator nach Anspruch 20, bei dem die inneren Leiter (41) ein Muster mit einer Vielzahl von Streifen aufweisen, die sich jeweils in einer Ebene in einer Vielzahl symmetrischer Strahlungsrichtungen erstrecken.

28. Zirkulator nach Anspruch 27, bei dem die Streifen gerade Streifen aufweisen.

29. Zirkulator nach Anspruch 20, bei dem die inneren Leiter ein Muster mit wenigstens einem geraden Streifen aufweisen, der sich in einer Ebene in einer vorbestimmten Richtung erstreckt.

## Revendications

1. Circulateur multicouche comprenant un élément circulateur (50), ledit élément circulateur étant pourvu de conducteurs internes (41) faits d'un matériau conducteur et d'un corps en matériau ferromagnétique isolant (40) entourant étroitement lesdits conducteurs internes, ledit corps en matériau ferromagnétique isolant étant constitué d'un corps continu unique chauffé comportant au moins une surface latérale, chacun desdits conducteurs internes (41) s'étendant jusqu'à la au moins une surface latérale et étant mis à la masse à son extrémité,
caractérisé en ce que lesdits conducteurs internes (41) sont constitués par trois conducteurs disposés suivant une forme en symétrie trigone et isolés les uns des autres, et en ce que le matériau conducteur desdits conducteurs internes possède un point de fusion et ledit corps en matériau ferromagnétique isolant est fait d'un matériau ferromagnétique ayant une température d'achèvement de frittage qui est supérieure audit point de fusion.

2. Circulateur selon la revendication 1, dans lequel ledit élément circulateur (50) possède une forme plane polygonale.

3. Circulateur selon la revendication 2, dans lequel ledit élément circulateur (50) possède une forme plane hexagonale.

4. Circulateur selon la revendication 1, dans lequel lesdits conducteurs internes (41) possèdent un motif comprenant une pluralité de bandes s'étendant, dans un plan, dans une pluralité de directions rayonnantes symétriques, respectivement.

5. Circulateur selon la revendication 4, dans lequel lesdites bandes comprennent des bandes droites.

6. Circulateur selon la revendication 1, dans lequel lesdits conducteurs internes (41) possèdent un motif comprenant au moins une bande droite s'étendant, dans un plan, dans une direction prédéfinie.

7. Circulateur selon la revendication 1, dans lequel ledit corps en matériau ferromagnétique isolant (40) est formé d'une seule couche continue en chauffant une couche de matériau ferromagnétique supérieure, au moins une couche de matériau ferromagnétique intermédiaire et une couche de matériau ferromagnétique inférieure, et dans lequel ledit élément circulateur (50) comprend des conducteurs de bobine possédant un motif enroulé d'au moins un tour autour de ladite au moins une feuille de matériau ferromagnétique intermédiaire, lesdits conducteurs internes (41) constituant une partie desdits conducteurs de bobine.

8. Circulateur selon la revendication 7, dans lequel ladite au moins une couche de matériau ferromagnétique intermédiaire et ladite couche de matériau ferromagnétique inférieure comportent des surface supérieures, et dans lequel lesdits conducteurs de bobine comprennent les conducteurs internes (41) formés sur les surfaces supérieures de ladite couche de matériau ferromagnétique intermédiaire et ladite couche de matériau ferromagnétique inférieure, et des conducteurs de jonction pour connecter les extrémités desdits conducteurs internes les unes aux autres.

9. Circulateur selon la revendication 7, dans lequel ladite couche de matériau ferromagnétique supérieure comporte une surface supérieure et ladite couche de matériau ferromagnétique inférieure comporte une surface inférieure, et dans lequel ledit élément circulateur (50) comprend des conducteurs de mise à la masse formés sur la surface supérieure de ladite couche de matériau ferromagnétique supérieure et la surface inférieure de ladite couche de matériau ferromagnétique inférieure, respectivement.

10. Circulateur selon la revendication 1, dans lequel ledit circulateur comprend également trois électrodes terminales (76) formées sur la au moins une surface latérale et connectées électriquement aux extrémités desdits conducteurs internes (41), une pluralité d'éléments de circuit (51a, 51b, 51c) électriquement connectés aux électrodes terminales (76), et des aimants permanents d'excitation (52, 53) pour appliquer un champ magnétique continu audit élément circulateur.

11. Circulateur selon la revendication 10, dans lequel lesdits éléments de circuit sont une pluralité de condensateurs électriquement connectés auxdites électrodes terminales respectives, pour résonner avec une fréquence appliquée.

12. Circulateur selon la revendication 10, dans lequel lesdits éléments de circuit sont des éléments de circuit discrets fixés de façon additionnelle et électriquement connectés auxdites électrodes terminales respectives.

13. Circulateur selon la revendication 10, dans lequel lesdits éléments de circuit sont des éléments de circuit internes formés de façon intégrée avec ledit élément circulateur.

14. Circulateur selon la revendication 10, dans lequel ledit circulateur comprend également un boîtier en métal étroitement fixé auxdits aimants permanents d'excitation (52, 53), ledit boîtier en métal possédant un trajet magnétique continu.

15. Circulateur selon la revendication 10, dans lequel ledit élément circulateur (50) possède une forme plane polygonale.

16. Circulateur selon la revendication 15, dans lequel ledit élément circulateur possède une forme plane hexagonale.

17. Circulateur selon la revendication 10, dans lequel lesdits conducteurs internes (41) possèdent un motif comprenant une pluralité de bandes s'étendant, dans un plan, dans une pluralité de directions rayonnantes symétriques, respectivement.

18. Circulateur selon la revendication 17, dans lequel lesdites bandes comprennent des bandes droites.

19. Circulateur selon la revendication 10, dans lequel lesdits conducteurs internes possèdent un motif comprenant au moins une bande droite s'étendant, dans un plan, dans une direction prédéfinie.

20. Circulateur selon la revendication 1, dans lequel ledit élément circulateur (50) est également pourvu de conducteurs de bobine d'au moins un tour, lesdits conducteurs internes constituant une partie desdits conducteurs de bobine, et dans lequel ledit circulateur comprend également trois électrodes terminales (76) formées sur la au moins une surface latérale et électriquement connectées aux extrémités desdits conducteurs internes (41), une pluralité d'éléments de circuit (51a, 51b, 51c) électriquement connectés aux électrodes terminales, et des aimants permanents d'excitation (52, 53) pour appliquer un champ magnétique continu audit élément circulateur.

21. Circulateur selon la revendication 20, dans lequel lesdits éléments de circuit (51a, 51b, 51c) sont une pluralité de condensateurs électriquement connectés auxdites électrodes terminales respectives, pour résonner avec une fréquence appliquée.

22. Circulateur selon la revendication 20, dans lequel lesdits éléments de circuit sont des éléments de circuit discrets fixés de façon additionnelle et électriquement connectés auxdites électrodes terminales respectives.

23. Circulateur selon la revendication 20, dans lequel lesdits éléments de circuit sont des éléments de circuit internes formés de façon intégrée avec ledit élément circulateur.

24. Circulateur selon la revendication 20, dans lequel ledit circulateur comprend également un boîtier en métal étroitement fixé auxdits aimants permanents d'excitation (52, 53), ledit boîtier en métal comprenant un trajet magnétique continu.

25. Circulateur selon la revendication 20, dans lequel ledit élément circulateur (50) possède une forme plane polygonale.

26. Circulateur selon la revendication 25, dans lequel ledit élément circulateur (50) possède une forme plane hexagonale.

27. Circulateur selon la revendication 20, dans lequel lesdits conducteurs internes (41) possèdent un motif comprenant une pluralité de bandes s'étendant, dans un plan, dans une pluralité de directions rayonnantes symétriques, respectivement.

28. Circulateur selon la revendication 27, dans lequel lesdites bandes comprennent des bandes droites.

29. Circulateur selon la revendication 20, dans lequel lesdits conducteurs internes (41) possèdent un motif comprenant au moins une bande droite s'étendant, dans un plan, dans une direction prédéfinie.
